(19)

Europäisches
Patentamt

European
Patent Office

Office européen
des brevets

(11) **EP 2 770 495 B1**

(12) **EUROPEAN PATENT SPECIFICATION**

(45) Date of publication and mention
of the grant of the patent:
**26.04.2017 Bulletin 2017/17**

(51) Int Cl.:
***G09G 3/36*** *(2006.01)*          ***G09G 3/20*** *(2006.01)*

(21) Application number: **13184621.4**

(22) Date of filing: **16.09.2013**

(54) **Display device and processing method of image signal thereof**

Anzeigevorrichtung und Verarbeitungsverfahren eines Bildsignals dafür

Dispositif d'affichage et procédé de traitement de signal d'image de celui-ci

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.02.2013 KR 20130018223**

(43) Date of publication of application:
**27.08.2014 Bulletin 2014/35**

(73) Proprietor: **Samsung Display Co., Ltd.
Gyeonggi-do (KR)**

(72) Inventors:
  • **Choi, Nam-Gon
    303-1102 Asan-si, (KR)**
  • **Jang, Yong Jun
    Yongin-si, Gyeonggi-do (KR)**
  • **Kim, Jung-Won
    113-1603 Seoul (KR)**

  • **Park, Geun Jeong
    49 Daegu (KR)**
  • **Jeong, Ji-Woong
    Yongin-si, Gyeonggi-do (KR)**
  • **Choi, Uk Chul
    111-1105, Cheonan-si, (KR)**
  • **Goh, Joon-Chul
    603-1804 Hwaseong-si, (KR)**
  • **Park, Cheol Woo
    203-1002 Suwon-si, Gyeonggi-do (KR)**
  • **You, Bon Hyun
    505-305 Yongin-si, Gyeonggi-do (KR)**

(74) Representative: **Dr. Weitzel & Partner
Patent- und Rechtsanwälte mbB
Friedenstrasse 10
89522 Heidenheim (DE)**

(56) References cited:
**EP-A2- 1 884 916     US-A1- 2009 009 509**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>**BACKGROUND**</u>

**(a) Technical Field**

Exemplary embodiments of the present invention relate to a liquid crystal display and a processing method of an image signal thereof.

**(b) Discussion of Related Art**

Display devices such as a liquid crystal display (LCD) and an organic light emitting device may include a display panel that includes a plurality of pixels including switching elements and a plurality of signal lines, a gray voltage generator that generates a gray reference voltage, and a data driver that uses the gray reference voltage to generate a plurality of gray voltages and applies a gray voltage corresponding to an input image signal among the generated gray voltages to a data line as a data signal.

The liquid crystal display includes two display panels including pixel electrodes and opposing electrodes, and a liquid crystal layer disposed therebetween and having dielectric anisotropy. The pixel electrodes are arranged in a matrix type and are connected to switching elements such as a thin film transistor (TFT), and sequentially receive a data voltage column-by-column. The opposing electrodes are formed over the display panel and are applied with a common voltage Vcom. A voltage applied to the pixel electrodes and the opposing electrodes generates an electric field in the liquid crystal layer, and a strength of the electric field is controlled to control transmittance of light transmitting through the liquid crystal layer, thereby obtaining desired images.

However, since the response speed of the liquid crystal molecules is slow, a predetermined time is required until the pixel voltage of the liquid crystal capacitor reaches a target voltage, which is a voltage used to acquire desired luminance, and the time is changed by a difference of the voltage previously charged in the liquid crystal capacitor. Therefore, for example, when a difference between the target voltage and the previous voltage is large, if only the target voltage is applied from the start, it may not reach the target voltage while the switching element is turned on.

US2009/0009509 A1 discloses a liquid crystal device and a method comprising a frame doubling processing, a false impulse drive processing and an overdrive interpolation processing. EP1884916 A2 discloses a liquid crystal display device and a method of compensating an image signal.

<u>**SUMMARY**</u>

At least one embodiment of the present invention provides a liquid crystal display, which may prevent display quality deterioration due to a slow liquid crystal response speed while improving transmittance and lateral visibility to increase display quality, and a driving method thereof.

A method of processing an image signal according to an exemplary embodiment of the present invention includes: receiving a previous image signal and a current image signal as two sequential input image signals; performing a first correction (DCC) and a doubling for the current image signal to generate a correction image signal of a plurality of doubled frames for the current image signal; and a portion of the plurality of doubled frames to generate a final correction image signal.

The generating of the correction image signal of the plurality of doubled frames may include: doubling the current image signal or the correction image signal into the plurality of doubled frames according to a TGM mode; and first correcting the current image signal or the doubled current image signal of the plurality of doubled frames.

A gamma curve applied to the plurality of doubled frames may include a first gamma curve and a second gamma curve, a luminance of a first image (H) of one of the doubled frames according to the first gamma curve may be not lower than luminance of a second image (L) of the one doubled frame according to the second gamma curve for an input image signal, and the TGM mode applied to the plurality of doubled frames for two sequential input images may include an HL-LH mode and an LH-HL mode.

The performing may include setting a luminance of the input image signal to one of change condition may include a break condition (Break) in which the luminance of the input image signal is changed in a middle of the TGM mode or a fit condition (Fit) in which the luminance of the input image signal is changed between two adjacent TGM modes, and setting a luminance of the current image signal to one of a rising condition (Rising) in which the luminance of the current image signal is higher than the luminance of the previous image signal or a falling condition (Falling) in which the luminance of the current image signal is lower than the luminance of the previous image signal.

The flag signal may have four values according to the set condition for the HL-LH mode and the LH-HL mode, and the value of the flag signal of the HL-LH mode may form a pair along with the value of the flag signal of the LH-HL mode and may have the same value.

The generating of the final correction image signal may include outputting the current image signal before the first correction as the final correction image signal, or multiplying the portion of the plurality of doubled frames by a weight value and outputting the multiplied result as the final correction image signal.

The weight value may be selected using the value of the flag signal.

The weight value of the rising condition and the fit condition in the HL-LH mode and the weight value of the rising condition and the break condition in the LH-HL mode may be equal to or more than 0 and equal to or less than 1, the weight value of the rising condition and the break condition in the HL-LH mode and the weight value of the rising condition and the fit condition in the LH-HL mode may be equal to or more than 1, the weight value of the falling condition and the fit condition in the HL-LH mode and the weight value of the falling condition and the break condition in the LH-HL mode may be equal to or more than 0 and equal to or less than 1, and the weight value of the falling condition and the break condition in the HL-LH mode and the weight value of the falling condition and the fit condition in the LH-HL mode may be equal to or more than 1.

The generating of the correction image signal of the plurality of doubled frames and the generating of the final correction image signal may include generating the correction image signal by the first correcting of the current image signal, doubling the correction image signal into the plurality of doubled frames, and post-processing the portion of the plurality of doubled frames using the flag signal.

The generating of the correction image signal of the plurality of doubled frames and the generating of the final correction image signal may include generating the correction image signal by the first correcting of the current image signal, adding the flag signal to a lower bit of the correction image signal, doubling the correction image signal added by the flag signal into the plurality of doubled frames, and post-processing the portion of the plurality of doubled frames using the flag signal added to the lower bit of the correction image signal.

The generating of the correction image signal of the plurality of doubled frames and the generating of the final correction image signal may include doubling the current image signal into the plurality of doubled frames, generating the correction image signal by the first correcting of the doubled current image signal, and post-processing the portion of the plurality of doubled frames using the flag signal.

The generating of the correction image signal of the plurality of doubled frames and the generating of the final correction image signal may include doubling the current image signal into the plurality of doubled frames, adding the flag signal to a lower bit of the previous image signal, generating the correction image signal by the first correcting of the doubled current image signal, and post-processing the portion of the plurality of doubled frames using the flag signal added to the lower bit of the previous image signal.

A liquid crystal display according to an exemplary embodiment of the present invention includes an image signal processor receiving a previous image signal and a current image signal as two sequential input image signals, and performing a first correction (DCC) and a doubling for the current image signal to generate a correction image signal comprising a plurality of doubled frames that are doubled for the current image signal, wherein the image signal processor includes a post processor for post-processing a portion of the plurality of doubled frames to generate a final correction image signal.

The image signal processor may include a TGM unit doubling the current image signal or the correction image signal into the plurality of doubled frames according to a TGM mode, and a DCC unit first correcting the current image signal or the doubled current image signal of the plurality of doubled frames.

A gamma curve applied to the plurality of doubled frames may include a first gamma curve and a second gamma curve, luminance of a first image (H) according to the first gamma curve may not be lower than luminance of a second image (L) according to the second gamma curve for an input image signal, and the TGM mode applied to the plurality of doubled frames for two sequential input images may include an HL-LH mode and an LH-HL mode.

A condition for changing the luminance of the input image may include one of a break condition (Break) in which the luminance of the input image signal is changed in a middle of the TGM mode or a fit condition (Fit) in which the luminance of the input image signal is changed between two adjacent TGM modes. A condition for changing the luminance of the current image signal may include one of a rising condition (Rising) in which the luminance of the current image signal is higher than the luminance of the previous image signal or a falling condition (Falling) in which the luminance of the current image signal is lower than the luminance of the previous image signal.

The liquid crystal display may include a comparator comparing the previous image signal and the current image signal to generate a flag signal for the luminance change condition may be further included, and the post processor may post-process the portion of the plurality of doubled frames to generate the final correction image signal.

The flag signal may have four values according to the luminance condition for each of the HL-LH mode and the LH-HL mode, and a value of the flag signal for the HL-LH mode may form a pair along with a value of the flag signal for the LH-HL mode and may have a same value.

The post processor may output the current image signal before the first correction as the final correction image signal, or may multiply the correction image signal of the portion of the plurality of doubled frames by a weight value and outputs the multiplied result as the final correction image signal.

The weight value may be selected using the value of the flag signal.

The weight value of the rising condition and the fit condition in the HL-LH mode and the weight value of the rising condition and the break condition in the LH-HL mode may be equal to or more than 0 and equal to or less than 1, the weight value of the rising condition and the break condition in the HL-LH mode and the weight value of the rising condition and the fit condition in the LH-HL mode may be equal to or more than 1, the weight value of the falling condition and the fit condition in the HL-LH mode and the weight value of the falling condition and the break condition in the LH-HL mode may be equal to or more than 0 and equal to or less than 1, and the weight value of the falling condition and the break condition in the HL-LH mode and the weight value of the falling condition and the fit condition in the LH-HL mode may be equal to or more than 1.

The DCC unit may output the correction image signal generated by the first correction of the current image signal to the TGM unit, the TGM unit may double the correction image signal into the plurality of doubled frame and outputs the doubled correct image signal to the post processor, and the post processor may post-process the portion of the plurality of doubled frames using the flag signal from the comparator.

The DCC unit may output the correction image signal generated by the first correction of the current image signal to the TGM unit, the comparator may add the flag signal to a lower bit of the correction image signal and outputs the correction image signal added by the flag signal to the TGM unit, the TGM unit may double the correction image signal added by the flag signal into the plurality of doubled frames and outputs the doubled correction mage signal added by the flag signal to the post processor, and the post processor may post-process the plurality of doubled frames using the flag signal added to the lower bit of the correction image signal.

The TGM unit may double the current image signal into the plurality of doubled frames and outputs the doubled current image signal to the DCC unit, the DCC unit may output the correction image signal generated by the first correction of the doubled current image signal to the post processor, and the post processor may post-process the plurality of doubled frames using the flag signal from the comparator.

The TGM unit may double the current image signal into the plurality of doubled frames and outputs the doubled current image signal to the DCC unit, the comparator may add the flag signal to the lower bit of the previous image signal and outputs the previous image signal added by the flag signal to the DCC unit, the DCC unit may output the correction image signal generated by the first correction of the doubled current image signal to the post processor, and the post processor may post-process the plurality of doubled frames using the flag signal added to the lower bit of the previous image signal.

According to at least one exemplary embodiment of the present invention, while improving the transmittance and the lateral visibility of the liquid crystal display, the display quality degradation due to the slow liquid crystal response speed may be prevented, thereby increasing the display quality of the liquid crystal display.

According to an exemplary embodiment of the invention, a method of processing an image signal of a liquid crystal display includes performing a dynamic capacitance compensation (DCC) and a doubling based on a current image signal to generate a correction image signal comprising a plurality of doubled frames and post-processing a portion of the plurality of doubled frames to generate a final correction image signal.

The performing may include doubling the current image according to a temporal gamma mixing TGM mode and performing the DCC on a result of the doubling and a previous image signal. The performing may instead include performing the DCC on a previous image signal and the current image signal and doubling a result of performing the DCC according to a temporal gamma mixing TGM mode. The performing may instead include doubling the current image according to a temporal gamma mixing TGM mode, comparing the current image signal and a previous image signal to generate a flag, appending the flag to the previous image signal to generate a modified previous image signal, and performing the DCC on a result of the doubling and the modified previous image signal.

## BRIEF DESCRIPTION OF THE DRAWINGS

FIG. 1 is a block diagram of a liquid crystal display according to an exemplary embodiment of the present invention,
FIG. 2 is a circuit diagram of one pixel of a liquid crystal display according to an exemplary embodiment of the present invention,
FIG. 3 is a block diagram of a signal controller of a liquid crystal display according to an exemplary embodiment of the present invention,
FIG. 4 and FIG. 5 are views of a luminance according to a gamma curve applied to one pixel according to a frame sequence of a liquid crystal display according to an exemplary embodiment of the present invention,
FIG. 6 is a graph of a gamma curve of a liquid crystal display according to an exemplary embodiment of the present invention,

FIG. 7 is a block diagram of a DCC unit of a liquid crystal display according to an exemplary embodiment of the present invention,

FIG. 8 is a view of one example of the lookup table (LUT) shown in FIG. 7,

FIG. 9 and FIG. 10 are views showing a method for calculating a correction image signal through a DCC type in a liquid crystal display according to an exemplary embodiment of the present invention,

FIG. 11 to FIG. 18 are graphs showing an input image signal, a target image for each frame, and a luminance change according to a frame in a liquid crystal display according to an exemplary embodiment of the present invention,

FIG. 19 is a table of one example of a weight value applied to post-processing in a liquid crystal display according to an exemplary embodiment of the present invention,

FIG. 20 is a table of a TGM mode and a luminance change condition in a liquid crystal display according to an exemplary embodiment of the present invention,

FIG. 21 is a block diagram of an image signal processor of a liquid crystal display according to an exemplary embodiment of the present invention,

FIG. 22 is a view of one example of a flag signal applied to an HL-LH mode of a TGM type in an image signal processing process in a liquid crystal display according to an exemplary embodiment of the present invention,

FIG. 23 is a view of one example of a flag signal applied to an LH-HL mode of a TGM type in an image signal processing process in a liquid crystal display according to an exemplary embodiment of the present invention,

FIG. 24 to FIG. 26 are block diagrams of an image signal processor of a liquid crystal display according to an exemplary embodiment of the present invention, and

FIG. 27 and FIG. 28 are flowcharts showing an image signal processing method according to a liquid crystal display according to an exemplary embodiment of the present invention.

## DETAILED DESCRIPTION

The present invention is defined by the independent claims. It will be described more fully hereinafter with reference to the accompanying drawings, in which exemplary embodiments of the invention are shown. A liquid crystal display and a driving method thereof according to an exemplary embodiment of the present invention will be described with reference to accompanying drawings.

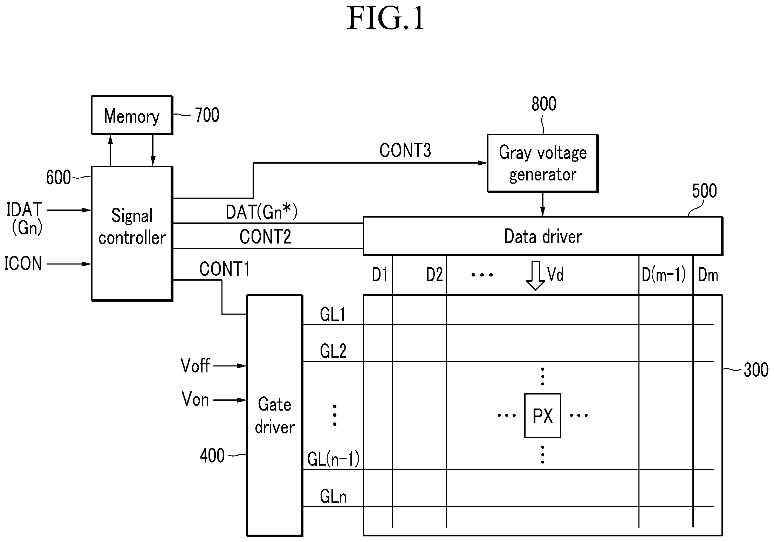

Firstly, a liquid crystal display according to an exemplary embodiment of the present invention will be described with reference to FIG. 1 to FIG. 3.

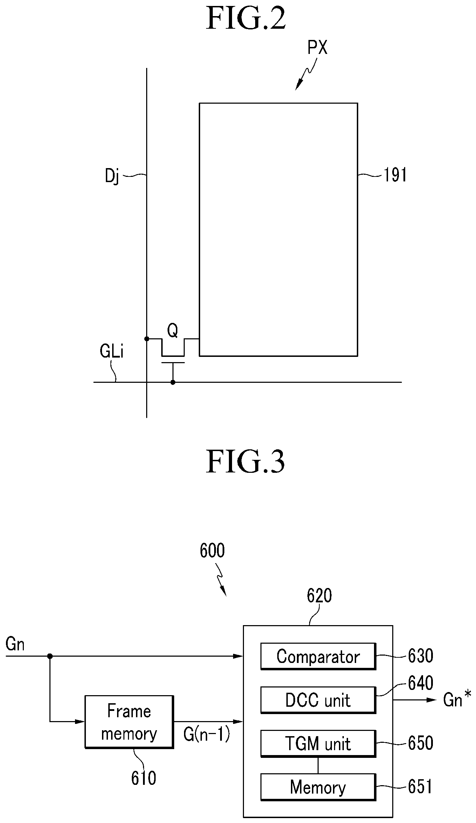

FIG. 1 is a block diagram of a liquid crystal display according to an exemplary embodiment of the present invention, FIG. 2 is a circuit diagram of one pixel of a liquid crystal display according to an exemplary embodiment of the present invention, and FIG. 3 is a block diagram of a signal controller of a liquid crystal display according to an exemplary embodiment of the present invention.

Referring to FIG. 1, a liquid crystal display according to an exemplary embodiment of the present invention includes a display panel 300, a gate driver 400 and a data driver 500 connected to the display panel 300, a gray voltage generator 800 connected to the data driver 500, a signal controller 600 controlling them, and a memory 700 connected to the signal controller 600.

In a viewpoint of an equivalent circuit, the display panel 300 includes a plurality of signal lines, and a plurality of pixels PX connected thereto and arranged in an approximate matrix. A lower panel and an upper panel (not shown) facing each other and a liquid crystal layer (not shown) interposed therebetween may be included in a viewpoint of a cross-section of the display panel 300.

The signal lines include a plurality of gate lines GL1-GLn transmitting a gate signal (referred to as "a scanning signal") and a plurality of data lines D1-Dm transmitting a data voltage.

Referring to FIG. 2, one pixel PX included in the liquid crystal display according to an exemplary embodiment of the present invention includes at least one switching element Q connected to at least one data line Dj (j=1, ⋯, m) and at least one gate line GLi (i=1, ⋯, n) and at least one pixel electrode 191 is connected thereto. The switching element Q may include at least one thin film transistor, and is controlled according to the gate signal transmitted by the gate line GLi thereby transmitting the data voltage Vd transmitted by the data line Dj to the pixel electrode 191. According to an exemplary embodiment of the present invention, one pixel PX includes at least two subpixels capable of displaying different luminances.

In a color display embodiment, each pixel PX displays one of the primary colors (spatial division) or alternately displays the primary colors according to time (temporal division) so that a desired color is recognized by the spatial and temporal sum of the primary colors. The plurality of adjacent pixels PX which display different primary colors may form one set (referred to as a dot) together.

The gate driver 400 is connected to the gate lines GL1-GLn to apply a gate signal formed by combining a gate-on voltage Von and a gate-off voltage Voff to the gate lines GL1-GLn.

The gray voltage generator 800 generates all gray voltages or a limited number of gray voltages (hereinafter referred to as "reference gray voltages") related to transmittance of the pixels PX. The (reference) gray voltage may be positive or negative with respect to the common voltage Vcom. The gray voltage generator 800 may receive the gamma data from the signal controller 600 to generate the (reference) gray voltage based on the gamma data.

The data driver 500 is connected to the data lines D1-Dm, selects a gray voltage from the gray voltage generator 800, and applies the selected gray voltage to the data line as a data signal. However, when the gray voltage generator 800 does not provide the voltage for all gray levels, but provides the reference gray voltages, in an exemplary embodiment, the data driver 500 divides the reference gray voltages to generate a gray voltage for all gray levels and then selects a data signal among them.

The memory 700 is connected with the signal controller 600 to store gamma data for a gamma curve and then transmits the gamma data to the signal controller 600. The gamma curve is a curve representing luminance or transmittance for a gray of the input image signal (IDAT), and may determine a gray voltage or a reference gray voltage based thereon. The gamma data stored in the memory 700 may include gamma data for two or more different gamma curves. The memory 700 may be included in the signal controller 600 or the gray voltage generator 800.

The signal controller 600 receives an input image signal (IDAT) and an input control signal (ICON) from a graphics controller (not shown) and controls the operations of the gate driver 400 and the data driver 500. The graphics controller receives the image data from the outside and processes the image data to generate and output the input image signal (IDAT) to the signal controller 600. In an exemplary embodiment, the graphics controller performs a frame range control of inserting a middle frame between adjacent frames to reduce a motion blur.

Referring to FIG. 3, the signal controller 600 according to an exemplary embodiment of the present invention includes a frame memory 610 and an image signal processor 620.

The frame memory 610 stores the input image signal (IDAT) input from an outside source (e.g., the graphics controller), and then outputs it to the image signal processor 620. The (n-1)-th (n is a natural number) input image signal (IDAT) is referred to as a previous image signal G(n-1), and the n-th input image signal (IDAT) is referred to a current image signal Gn. The frame memory 610 stores the previous image signal G(n-1). The image signal processor 620 receives the current image signal Gn together with the previous image signal G(n-1) from the frame memory 610 when the current image signal Gn is output. The frame memory 610 may be positioned inside or outside the signal controller 600.

The image signal processor 620 performs an operation on the previous image signal G(n-1) and the current image signal Gn to generate a final correction image signal Gn*.

The image signal processor 620 according to an exemplary embodiment of the present invention includes a comparator 630, a DCC (dynamic capacitance compensation) unit 640, and a TGM (temporal gamma mixing) unit 650.

The comparator 630 compares the previous image signal G(n-1) and the current image signal Gn to generate a flag signal. The flag signal is information for a luminance change condition, and may be added to a lower bit of the previous image signal G(n-1) or the current image signal Gn or may be stored to an additional memory. A detailed example of the flag signal will be described later.

The TGM unit 650 converts the current image signal Gn as one input image signal (IDAT) into a plurality of frames applied with at least two different gamma curves through a doubling and TGM signal processing. The TGM signal processing processes the input image signal to be displayed as the image according to the different gamma curves in a plurality of doubled frames. In an exemplary embodiment, the TGM signal processing is omitted. The image signal input to the TGM unit 650 may be a correction image signal Gn' that is output from the DCC unit 640 or the current image signal Gn without being processed in the DCC unit 640. Also, the flag signal generated in the comparator 630 may be added to the lower bit of the current image signal Gn input to the TGM unit 650. The TGM unit 650 may be connected to a memory 651 storing the input image signal in units of frames. The memory 651 may be positioned inside or outside of the signal controller 600.

A plurality of frames of the doubling and TGM signal processing are referred to as one frame set. Accordingly, a frame frequency to input the data voltage corresponding to the image signal of a plurality of frames that are processed by the doubling and TGM signal processing to the display panel 300 may be double the image frequency at which the input image signal (IDAT) is input. In an exemplary embodiment of the invention, the doubling and TGM signal processing setting two frames as one frame is described, but the invention is not limited thereto.

The image frequency may be 1/n (n is a natural number of 2 or more) of the frame frequency. For example, when the frame frequency is 120 Hz, the image frequency may be 60 Hz, and when the frame frequency is 240Hz, the image frequency may be 60 Hz, 80 Hz, or 120 Hz. For example, when the input image signal (IDAT) input to the signal controller 600 is the signal processed by the frame rate control that was previously described, the image frequency may be 120 Hz and the frame frequency may be 240 Hz, and when the input image signal (IDAT) is not processed by the frame rate control, the image frequency may be 60 Hz and the frame frequency may be 120 Hz.

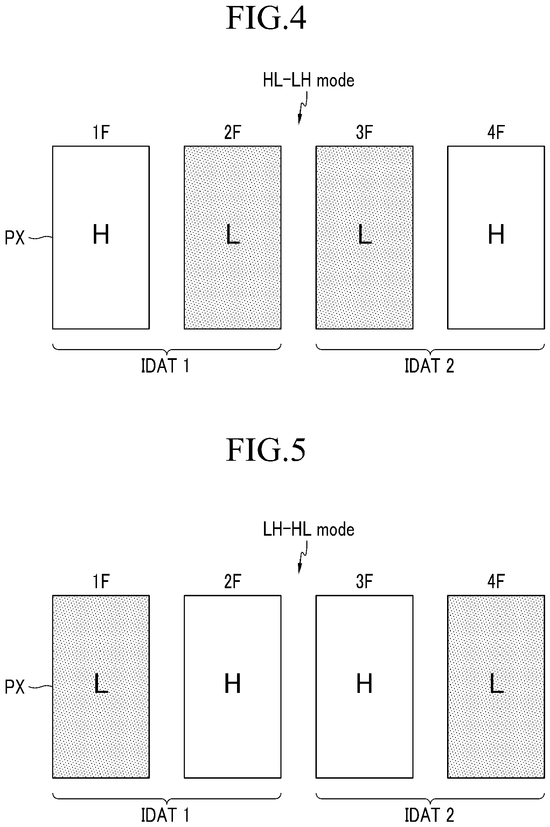

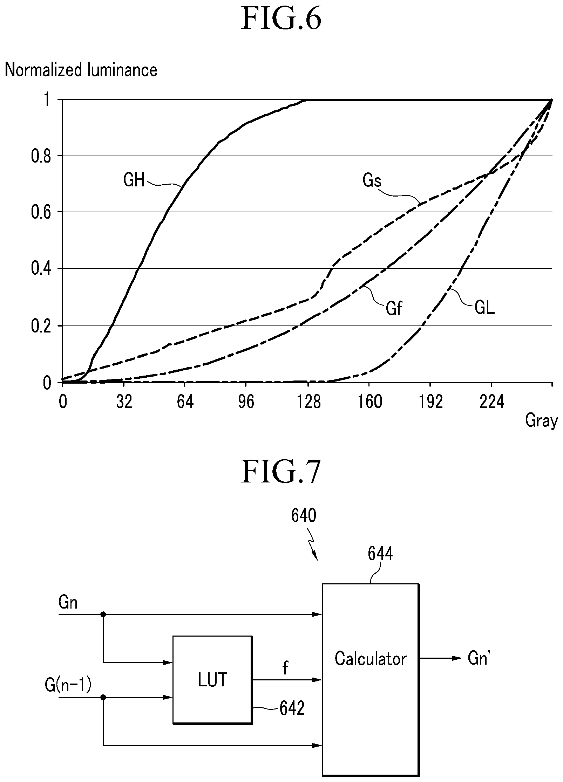

Referring to FIG. 4 and FIG. 5, if the image is displayed by the image signals of two frames included in one frame set, the image according to different gamma curves may be displayed. In detail, in two frames of one frame set, one may display the image (referred to as the first image (H)) according to the first gamma curve GH, and the other may display the image (referred to as the second image (L)) according to the second gamma curve GL. For example, referring to FIG. 6, the gamma data of the liquid crystal display according to an exemplary embodiment of the present invention may include the gamma data for the first gamma curve GH and the second gamma curve GL. Here, the luminance of the image according to the first gamma curve GH may be higher than or equal to the luminance of the image according to the second gamma curve GL. In order to improve side visibility of the display device, the first and second gamma curves may be adjusted so that a synthetic gamma curve in the front of the first and second gamma curves GH and GL coincides with a front gamma curve Gf (for example, a gamma curve having a gamma value of 2.2) which is determined to be most suitable for the display device and a synthetic gamma curve in the side thereof is maximally close to the front gamma curve Gf.

Referring to FIG. 4, when the first image H is displayed in the first frame of one frame set for the input image signal (IDAT1) and the second image L is displayed in the second frame of the one frame set, the second image L is displayed in the first frame of a second frame set for the next input image signal (IDAT2) and the first image H is displayed in the second frame of the second frame set. This TGM mode is referred to as an HL-LH mode.

Referring to FIG. 5, when the second image L is displayed in the first frame of one frame set for the input image signal (IDAT1) and the first image H is displayed in the second frame of the one frame set, the first image H is displayed in the first frame of the second frame set for the next input image signal (IDAT2) and the second image L is displayed in the second frame in the second frame set. This TGM mode is referred to as an LH-HL mode.

According to an exemplary embodiment, when the first image H is displayed in the first frame of one frame set for the input image signal (IDAT1) and the second image L is displayed in the second frame of the one frame set, the first image H is displayed in the first frame of the second frame set for the next input image signal (IDAT2) and the second image L is displayed in the second frame in the second frame set. This TGM mode is referred to as an HL-HL mode.

According to an exemplary embodiment, when the second image L is displayed in the first frame of one frame set for the input image signal (IDAT1) and the first image H is displayed in the second frame of the one frame set, the second image L is displayed in the first frame of the second frame set for the next input image signal (IDAT2) and the first image H is displayed in the second frame in the second frame set. This TGM mode is referred to as an LH-LH mode.

Alternatively, the gamma data may include the gamma data for at least three different gamma curves, and accordingly, the image signals of at least three frames included in one frame set may display the image according to at least three different gamma curves.

For one pixel PX, the TGM modes applied to the input image signals (IDAT) that are temporally adjacent to each other may be the same or different from each other. Also, an application sequence of the TGM mode for each frame may be changed. Also, the same TGM mode may be applied for the continuous frame set and the different TGM modes may be alternately applied. For example, if the HL-LH mode is applied for the previous image signal G(n-1), the LH-HL mode may be applied to the current image signal Gn. In an exemplary embodiment of the invention, the same TGM mode is applied to the input image signals (IDAT) that are temporary adjacent.

Also, the TGM mode applied to one pixel PX and the TGM mode applied to the pixel PX adjacent thereto may be the same or different. For example, when the TGM mode applied to one pixel PX is the HL-HL mode, the TGM mode applied to the adjacent pixel PX may be the LH-LH mode, and in contrast, when the TGM mode applied to one pixel PX is the LH-LH mode, the TGM mode applied to the adjacent pixel PX may be the HL-HL mode.

In an exemplary embodiment, if the image signal of the frame is processed by the doubling and TGM signal processing according to the selected TGM mode, the images according to the different gamma curves are displayed in the consecutive frames such that the combination gamma curve in the side is closest to the front gamma curve, thereby improving the lateral visibility. In an exemplary embodiment, one pixel PX is not divided into two sub-pixels to improve the transmittance. When the HL-LH mode or the LH-HL mode are included in the consecutive frame set, if a display sequence of the first image H and the second image L is reversed, the second image L having the lower luminance is displayed in the consecutive frame such that the slow response speed of the liquid crystal molecules may be compensated in the case of the liquid crystal display. In detail, the response speed (referred to as a decreasing response speed) when the inclination direction of the liquid crystal molecules is changed from the high luminance of the image to the low luminance is obtained over a predetermined level to sufficiently improve the lateral visibility by applying the temporal division driving method according to an exemplary embodiment of the present invention. In two consecutive frames according to an exemplary embodiment of the present invention, the second image L having the low luminance is displayed such that the low gray is sufficiently displayed in the temporal division driving thereby further improving the lateral visibility. Likewise, the first image H having the high luminance may be displayed in the consecutive frame. Accordingly, when displaying the image of the high luminance after displaying the image of the low luminance, the response speed of the liquid crystal molecule is compensated, thereby displaying a sufficiently high gray.

The DCC unit 640 compares the previous image signal G(n-1) and the current image signal Gn according to the DCC (dynamic capacitance compensation) method to improve the response speed of the liquid crystal to compensate the current image signal Gn according to a predetermined condition when the grays of two image signals G(n-1) and Gn are different from one another. In an exemplary embodiment, the current image signal Gn input to the DCC unit 640 is the image signal that is processed by the doubling and TGM signal processing in the TGM unit 650 or the current image signal Gn before the doubling and TGM signal processing in the TGM unit 650. In an exemplary embodiment, the flag signal generated in the comparator 630 is added to the lower bit of the current image signal Gn or the previous image signal G(n-1) input to the DCC unit 640. On the other hand, if the previous image signal G(n-1) and the current image signal Gn are equal to each other, the current image signal Gn may be output as it is. For example, if the current image signal Gn and the previous image signal G(n-1) input to the DCC unit 640 are identical, the DCC unit 640 may output the current image signal Gn or a signal resulting from performing the doubling and TGM processing on the current image signal Gn.

Referring to FIG. 7, the DCC unit 640 according to an exemplary embodiment of the present invention includes a lookup table 642 and a calculator 644 connected thereto.

The lookup table 642 stores correction reference data f for a pair (G(n-1), G(n)) of the previous image signal G(n-1) and the current image signal Gn. To reduce the capacity of the lookup table 642, the lookup table 642 may store the correction image signal Gn' determined for a limited number of pairs (e.g., G(n-1), G(n)) of the previous image signal G(n-1) and the current image signal Gn as the correction reference data f. For example, the lookup table 642 may determine and store the correction reference data f by using a high bit of the previous image signal G(n-1) and the current image signal Gn. The correction reference data f stored to the lookup table 642 may be determined by a measuring result, and is a value that is generated by applying the DCC to the current image signal Gn based on the previous image signal G(n-1) and the current image signal Gn.

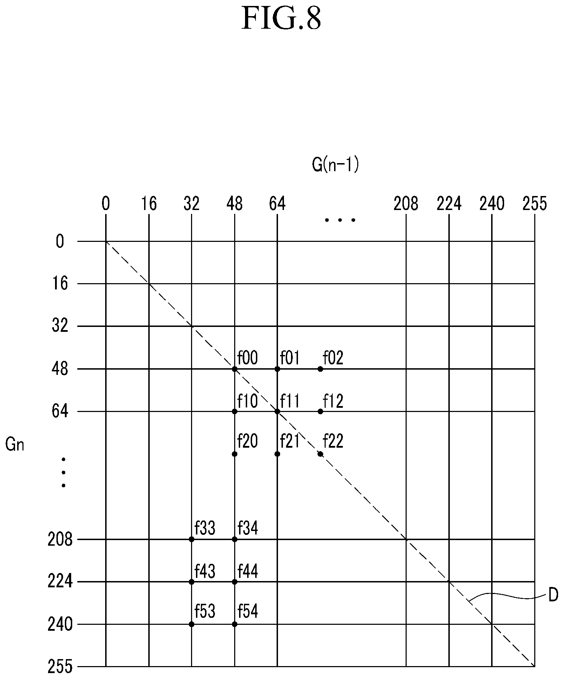

For example, FIG. 8 shows the lookup table 642 including $17 \times 17$ blocks configured by using only the high bit of 4 bits in a case of the 8-bit input image signal (IDAT). Points existing on the boundary of the block are points where the lower bit of the previous image signal G(n-1) or the current image signal Gn is 0. The high bits of the points existing in each block for the previous image signal G(n-1) and current image signal Gn are the same, and the points that are positioned on the left edge and the upper edge also have the high bit like the points inside the block. However, the high bits of the points existing on the right edge and the lower edge are different from the high bits of the points inside the block.

In an exemplary embodiment, the calculator 644 obtains the correction image signal Gn' for the combination of the previous image signal G(n-1) and the current image signal Gn that are not stored to the lookup table 642 by using interpolation through the correction reference data f from the lookup table 642, and the previous image signal G(n-1) and the current image signal Gn. The processing obtaining the correction image signal Gn' by the DCC processing may be referred to as a first correction.

To obtain the correction image signal Gn', different interpolations may be used for the blocks including a diagonal D of the lookup table 642, that is, the blocks where the high bits of the previous image signal G(n-1) and the current image signal Gn are the same and the blocks where the high bits of the previous image signal G(n-1) and the current image signal Gn are different. When applying the interpolation for a point of any block, the interpolation may be applied with reference to the correction reference data f of four apexes defining the block.

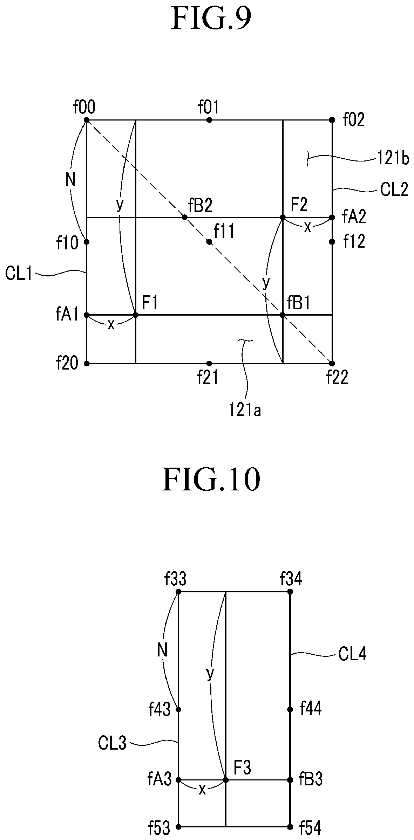

Referring to FIG. 9 as well as FIG. 8, if a method of obtaining the correction image signal Gn' in a low gray difference block is described, the low gray difference block where the high bit of the current image signal Gn and the high bit of the previous image signal G(n-1) are the same may be defined by the square block having the apexes of the first, second, third, fourth, fifth, sixth, seventh, eighth, and ninth reference data (for, f10, f20, f01, f11, f12, f02, f21, and f22). The low gray difference block may include a lower triangular block 121a defined by the first, second, third, fifth, sixth, and ninth reference data (f00, f10, f20, f11, f12, and f22) and an upper triangular block 121b defined by the first, fourth, fifth, seventh, eighth, and the ninth reference data (f00, f01, f11, f02, f21, and f22). The lower triangular block 121a is positioned under the diagonal (D), and the current image signal Gn may be defined by a rising part larger than the previous image signal G(n-1). The upper triangular block 121b is positioned on the diagonal (D), and the current image signal Gn may be defined by a falling part smaller than the previous image signal G(n-1).

Firstly, one example of a calculating process of the first interpolation F1 as the correction image signal Gn' in the lower triangular block 121 a will be described.

The first reference equation fA1 made of a second order formula is calculated based on the first to third reference data f00, f10, and f20 existing on the first column line CL1 of the lower triangular block 121 a, and a column component of the correction image signal Gn' may be calculated by the first reference equation fA1.

In an exemplary embodiment, the first reference equation fA1 is defined by Equation 1.

(Equation 1)

$$fA1 = a1\,y^2 + b1\,y + c1$$

$$a1 = \frac{1}{4N}\,(f20 - 2f10 + f00)$$

$$b1 = \frac{1}{4N}\,(-f20 + 4f10 - 3f00) - \frac{y0}{2N^2}\,(f20 - 2f10 + f00)$$

$$c1 = f00 - a1\,y0^2 - b1\,y0$$

Here, N is a block interval, y is a value of the lower bit of the current image signal Gn divided by the block interval N, and y0 is a y value calculated by the first reference data f00 in the first reference equation fA1.

Next, the second reference equation fB1 made of a first order formula is calculated based on the first and fifth reference data f00 and f11 existing on the diagonal (D) of the lower triangular block 121a. In an exemplary embodiment, the second reference equation fB1 is defined by Equation 2.

(Equation 2)

$$fB1 = f00 + y$$

The first interpolation F1 may be defined by a proportional expression of the first and second reference equations fA1 and fB1. A proportional expression like Equation 3 for the lower triangular block 121a may be established.

(Equation 3)

$$x:y = (F1 - fA1):(fB1 - fA1)$$

Accordingly, the first interpolation F1 may be defined by Equation 4.

(Equation 4)

$$F1 = (1 - b1)x + b1y - a1xy + (f00 - c1)\frac{x}{y} + a1\,y^2 + c1$$

Here, x is a value of the lower bit of the previous image signal G(n-1) divided by the block interval N.

Resultantly, the calculator 644 may calculate the correction image signal Gn' by using the first interpolation F1 when the current image signal Gn is larger than the previous image signal G(n-1).

Next, one example of a calculating a second first interpolation F2 as the correction image signal Gn' in the upper triangular block 121b will be described.

The third reference equation fA2 made of the second order formula is calculated based on the seventh to ninth reference data f02, f12, and f22 existing on the second column line CL2 of the upper triangular block 121b, and the column component of the correction image signal Gn' may be calculated by using the third reference equation fA2. In an exemplary embodiment, the third reference equation fA2 is defined by Equation 5.

(Equation 5)

$$fA2 = a2\,y^2 + b2y + c2$$

$$a2 = \frac{1}{4N}\,(f02 - 2f12 + f22)$$

$$b2 = \frac{1}{4N}\,(-f02 + 4f12 - 3f22) - \frac{y2}{2N^2}\,(f02 - 2f12 + f22)$$

$$c2 = f22 - a2\,y2^2 - b2y2$$

Here, y2 is the y value calculated by the ninth reference data f22 in the third reference equation fA2.

Next, the fourth reference equation fB2 made of the first order formula is calculated based on the fifth and ninth reference data f11 and f22 existing on the diagonal (D) of the upper triangular block 121b. In an exemplary embodiment, the fourth reference equation fB2 is defined like Equation 6.

(Equation 6)

$$fB2 = f22 + y$$

The second interpolation F2 may be defined by a proportional expression of the third and fourth reference equations fA1 and fB1. The proportional expression like Equation 3 for the upper triangular block 121b maybe established.

(Equation 7)

$$x:y = (fA2 - F2):(fA2 - fB2)$$

Accordingly, the second interpolation F2 may be defined like Equation 8.

(Equation 8)

$$F2 = (1 - b2)x + b2y - a2xy + (f22 - c2)\frac{x}{y} + a2\,y^2 + c2$$

Resultantly, the calculator 644 may calculate the correction image signal Gn' by using the second interpolation F2 when the current image signal Gn is smaller than the previous image signal G(n-1).

As described above, for the low gray difference block including the diagonal (D), the correction image signal Gn' may be calculated by using Equation 4 and Equation 8 and thus the current image signal Gn may be corrected more precisely. That is, for two blocks 121a and 121b, the current image signal Gn may be corrected more precisely by respectively applying the first and second interpolations F1 and F2 although the slopes of the lookup table 642 in the lower triangular block 121a and the upper triangular block 121b are different according to the liquid crystal characteristic.

Referring to FIG. 10 as well as FIG. 8, if a method obtaining the correction image signal Gn' in a high gray difference block is described, the high gray difference block where the high bit of the current image signal Gn and the high bit of the previous image signal G(n-1) are different may be defined by the square block having the apexes of the tenth, the eleventh, the twelfth, the thirteenth, the fourteenth, and the fifteenth reference data (f33, f43, f53, f34, f44, and f54). In the high gray difference block, the correction image signal Gn' may be calculated by the third interpolation F3.

A calculation process of the third interpolation F3 will be described.

The fifth reference equation fA3 made of the second order formula is calculated based on the tenth to twelfth reference data f33, f43, and f53 existing on the third column line CL3 of the high gray difference block, and the column component of the correction image signal Gn' may be calculated by the fifth reference equation fA3.

In an exemplary embodiment, the fifth reference equation fA3 is defined by Equation 9.

(Equation 9)

$$fA3 = a3\,y^2 + b3y + c3$$

$$a3 = \frac{1}{4N}\,(f53 - 2f43 + f33)$$

$$b3 = \frac{1}{4N}\,(-f53 + 4f43 - 3f33) - \frac{y3}{2N^2}\,(f53 - 2f43 + f33)$$

$$c3 = f33 - a3y3 - b3y3$$

Here, y3 is the y value calculated by the tenth reference data f33 in the fifth reference equation fA3.

Next, the sixth reference equation fB3 made of the second order expression is calculated based on the thirteenth to fifteenth reference data f34, f44, and f54 existing on the fourth column line CL4 of the high gray difference block, and the column component of the correction image signal Gn' may be calculated by the sixth reference equation fB3. The sixth reference equation fB3 may be defined by Equation 10.

(Equation 10)

$$fB3 = a'3\,y^2 + b'3y + c'3$$

$$a'3 = \frac{1}{4N}\,(f54 - 2f44 + f34)$$

$$b'3 = \frac{1}{4N}\,(-f54 + 4f44 - 3f34) - \frac{y4}{2N^2}\,(f54 - 2f44 + f34)$$

$$c'3 = f34 - a'3\,y4^2 - b'3y4$$

Here, y4 is the y value calculated by the thirteenth reference data f34 in the sixth reference equation fB3.

The third interpolation F3 may be defined by a proportional expression of Equation 11 of the fifth and sixth reference equations fA3 and fB3.

(Equation 11)

$$N : x = (fB3 - fA3) : (F3 - fA3)$$

Accordingly, the third interpolation F3 may be defined by Equation 12.

(Equation 12)

$$F3 = (\frac{a'3}{N}\,x - \frac{a3}{N}\,x + a3)y^2 + (\frac{b'3}{N}\,x - \frac{b3}{N}\,x + b3)y + \frac{c'3 + c3}{N}\,x + c3$$

As described above, for the high gray difference block, the correction image signal Gn' is calculated by using the third interpolation F3 calculated by the fifth and sixth reference equations fA3 and fB3 made of the second order expression, and the current image signal Gn may be exactly corrected.

Also, the DCC unit 640 may generate the correction image signal Gn' according to the first correction by various methods.

The DCC unit 640 may further includes a post processor (not shown) post-processing (referred to as secondary correction) the image signal of a portion among a plurality of frames of the correction image signal Gn' resulting from the doubling and TGM signal processing in the TGM unit 650. The image signal for the post-processing may be the correction image signal Gn' that is firstly corrected in the DCC unit 640 after the doubling and TGM signal processing in the TGM unit 650, and in contrast, it may be the image signal of which the correction image signal Gn' is firstly generated by the first correction in the DCC unit 640 and then is processed by the doubling and TGM signal processing in the TGM unit 650. For example, the post-processing may operate on a signal derived from performing a doubling and TGM processing followed by a DCC or a signal derived from performing a DCC followed by the doubling and TGM processing. The DCC unit 640 may multiply a predetermined weight value by the image signal of a portion among the plurality of frames of the correction image signal Gn' that is processed by the doubling and TGM signal in the post-processing, or may output the current image signal Gn before the first correction. The weight value may be stored to a separate memory inside the signal controller 600 with a lookup table form. The frame post-processed in the post processor may be the second frame of two frames that is processed by the doubling and TGM signal processing, or a frame of more than the second frame among a plurality of frames that are processed by the doubling and TGM signal processing.

Next, a driving method including an image signal processing method of a liquid crystal display according to an exemplary embodiment of the present invention will be described with reference to the above-described drawings.

The signal controller 600 receives the input image signal (IDAT) and an input control signal (ICON) controlling the display thereof from the outside. The input image signal (IDAT) includes the luminance information of each pixel PX, and the luminance has grays that correspond to a defined number. The input control signal (ICON) may include at least one of a vertical synchronizing signal, a horizontal synchronizing signal, a main clock signal, a data enable signal, etc.

The signal controller 600 stores a first input image signal (IDAT) that is input to the frame memory 610 as the previous image signal G(n-1). Next, if a second input image signal (IDAT) is input, the second input image signal (IDAT) is output to the image signal processor 620 as the current image signal Gn along with the previous image signal G(n-1) that is stored to the frame memory 610.

The image signal processor 620 processes the current image signal Gn through the above-described comparator 630, DCC unit 640, and TGM unit 650 to generate a final correction image signal Gn*. The process sequence in the comparator 630, the DCC unit 640, and the TGM unit 650 may be variously changed.

The signal controller 600 generates a gate control signal CONT1, a data control signal CONT2, and a gamma control signal CONT3. The signal controller 600 outputs the gate control signal CONT1 to the gate driver 400, the data control signal CONT2 and the final correction image signal Gn* as the output image signal DAT to the data driver 500, and the gamma control signal CONT3 to the gray voltage generator 800. The gamma control signal CONT3 may include the gamma data stored to the memory 700. The gamma data may be directly output to the gray voltage generator 800. Also, the memory 700 may be omitted.

The gray voltage generator 800 generates gray voltages or a finite number of reference gray voltages according to the gamma control signal CONT3 to transmit the gray voltages or the reference gray voltages to the data driver 500. The gray voltage may be respectively provided by a set for the different gamma curves. For example, the gray voltage may depend on the gamma curve shown in FIG. 6. In this case, the TGM signal processing changing the gray of the image signal input in the TGM unit 650 may be omitted, and the gray voltage of the different set may be applied to a plurality of doubled frames.

The data driver 500 receives the output image data DAT for the pixels PX of one row depending on the data control signal CONT2, selects the gray voltage corresponding to each output image data DAT to convert the output image data DAT into the analog data voltage (Vd), and then applies the converted analog data voltage to the corresponding data lines D1-Dm. When a number of frames processed by the doubling and TGM signal processing in the TGM unit 650 is 2, the frame frequency at which the data driver 500 outputs the data voltage (Vd) to the data line (D1-Dm) may be two times the input frequency of the input image signal (IDAT).

Alternatively, a plurality of gray voltages may be generated in the data driver 500.

According to an exemplary embodiment of the present invention, the gray voltage generator 800 or the data driver 500 only generate one set of gray voltages. In this case, the above described TGM unit 650 processes the image signal of a plurality of doubled frames by the TGM signal, and converts them into an analog data voltage (Vd) through the gray voltage of the same set to display an image according to the different gamma curves.

The gate driver 400 applies the gate-on voltage Von to the gate lines GL1-GLn according to the gate control signal CONT1 to turn on the switching element connected to the gate lines G1-Gn. Thus, the data signal applied to the data lines D1-Dm is applied to the corresponding pixel PX through the turned-on switching element. If the data voltage (Vd) is applied to the pixel PX, the pixel PX displays the luminance corresponding to the data voltage (Vd).

While the process is repeated by setting 1 horizontal period (written as "1H") as a unit, gate-on voltages Von are sequentially applied to all of the gate lines GL1-GLi and data voltages are applied to all of the pixels PX, thereby displaying images of one frame. The horizontal period may be the same as one period of a horizontal synchronizing signal Hsync and a data enable signal DE.

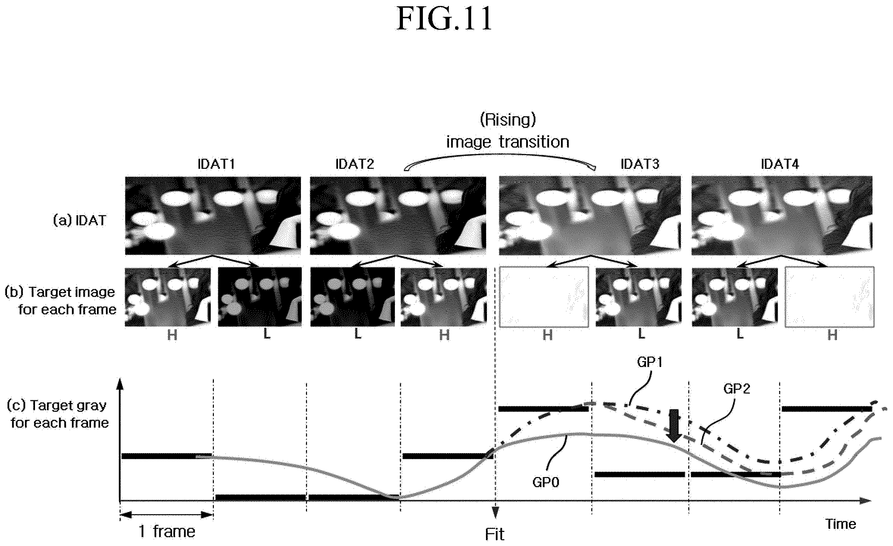

FIG. 11 to FIG. 18 are graphs showing an input image signal, a target image for each frame, and a luminance change according to a frame in a liquid crystal display according to an exemplary embodiment of the present invention,

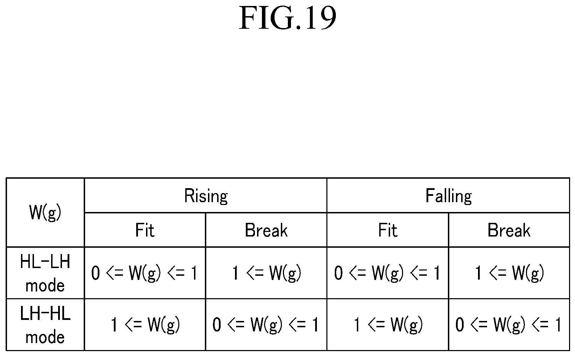

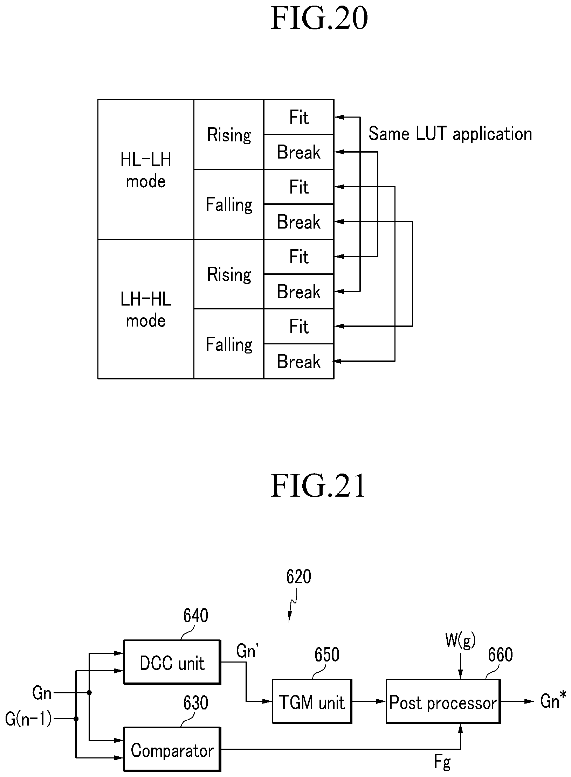

FIG. 19 is a table of one example of a weight value applied to post-processing in a liquid crystal display according to an exemplary embodiment of the present invention, and FIG. 20 is a table of a TGM mode and a luminance change condition in a liquid crystal display according to an exemplary embodiment of the present invention.

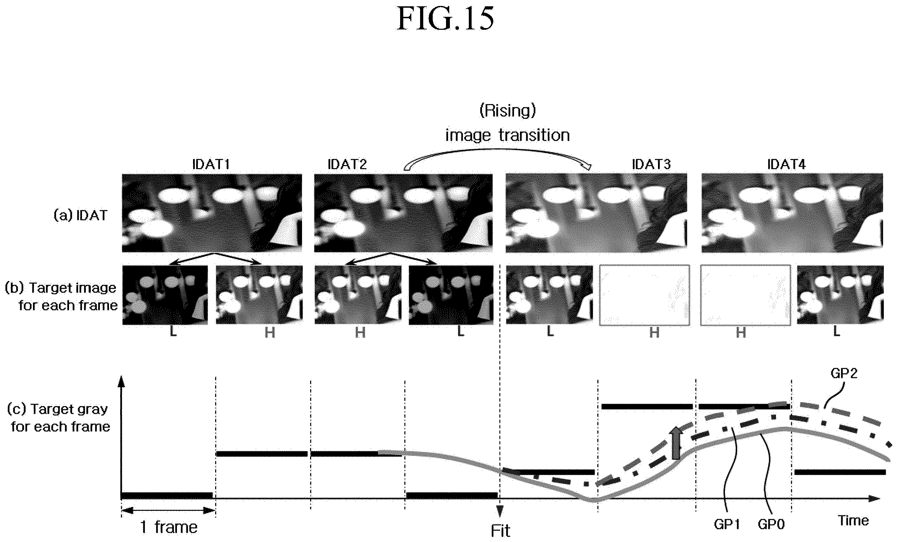

In an exemplary embodiment of the invention, a case where the frame frequency is two times the image frequency, that is, in a case where one input image signal (IDAT) is converted into two frames by the doubling and TGM signal processing in the TGM unit 650, will be described as an example. In an exemplary embodiment, the input image signal (IDAT) is the image signal processed by the frame rate control before the input to the signal controller 600. FIG. 11 to FIG. 14 show a case of the HL-LH mode among the TGM modes, and FIG. 15 to FIG. 18 show a case of the LH-HL mode among the TGM modes.

Referring to FIG. 11(a) and FIG. 11(b), the four continuously input image signals (IDAT1-IDAT4) that are sequentially input to the signal controller 600 are processed with the doubling and TGM signal processing in the TGM unit 650, and thereby the HL-LH mode is sequentially applied. Also, a luminance change (e.g., an image transition) is generated between the second input image signal (IDAT2) and the third input image signal (IDAT3) among the four input image signals (IDAT1-IDAT4). In the exemplary embodiment shown in FIG. 11, the gray of the third input image signal (IDAT3) is larger than the gray of the second input image signal (IDAT2). An increase of the luminance among consecutive image signals may be referred to as a rising condition (Rising). Also, in the present exemplary embodiment, the HL-LH mode is applied once for the first input image signal (IDAT1) and the second input image signal (IDAT2) such that the luminance is changed after one TGM mode is finished. This condition is referred to as a fit condition (Fit).

FIG. 11(c) shows a constant target gray for each frame of the target image that is processed with the doubling and TGM signal processing shown in FIG. 11(b) and luminance changes GP0, GP1, and GP2 of the image. When the HL-LH mode is only applied in the TGM unit 650 through the doubling and TGM signal processing of the image signal and the image is output without the processing in the DCC unit 640, like the curve GP0 before the correction of FIG. 11(c), the liquid crystal cannot quickly produce the luminance change of the third input image signal (IDAT3) such that the increased luminance of the third input image signal (IDAT3) is not sufficiently expressed.

In contrast, as described above, when outputting the image as the correction image signal that is processed by the first correction in the DCC unit 640, the image as the correction image signal Gn' having a larger gray than the original third input image signal (IDAT3) is output such that the increased luminance of the third input image signal (IDAT3) is sufficiently expressed like the first correction curve GP1 of FIG. 11(c). In the first frame displaying the first image (H) among the frames that are processed by the doubling and TGM signal of the third input image signal (IDAT3), the slope of the first correction curve GP1 is different from the slope of the curve GP0 before the correction.

However, in this case, the first correction processing of the DCC unit 640 is also applied to the second frame displaying the second image (L) of the low luminance among the frames that are processed with the doubling and TGM signal processing of the third input image signal (IDAT3) such that the second image (L) of a sufficiently low luminance is not displayed as shown in the first correction curve GP1. Accordingly, the difference between the luminance of the image and the target gray is largely increased in the second frame displaying the second image (L) of the low luminance among the frames that are processed with the doubling and TGM signal processing of the third input image signal (IDAT3). However, according to an exemplary embodiment of the present invention, the DCC unit 640 of the signal controller 600 outputs the image signal before the first correction as the final correction image signal Gn*, multiples a predetermined weight value W(g) by the correction image signal Gn' that is firstly corrected and outputs it as the final correction image signal Gn*, or applies the post-processing vicariously outputting the image signal Gn before the first correction in the second frame among the frames that are processed with the doubling and TGM signal processing of the third input image signal (IDAT3) such that the image of a sufficiently low luminance close to the target gray is displayed in the second frame among the frames that are processed with the doubling and TGM signal processing of the third input image signal (IDAT3) like the secondary correction curve GP2 of FIG. 11(c).

In an exemplary embodiment, the weight value (W(g)) used for the post-processing has a value equal to or more than 0 and equal to or less than 1, as shown in FIG. 19.

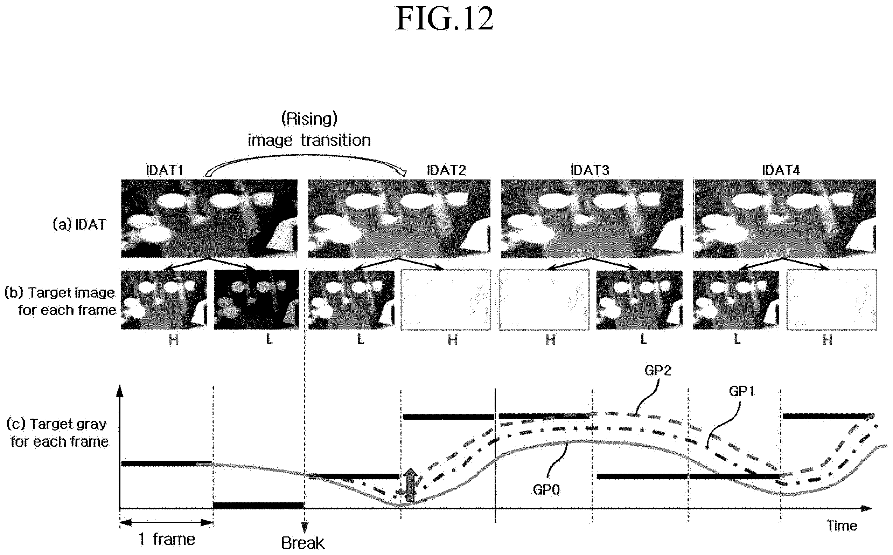

Next, referring to FIG. 12(a) and FIG. 12(b), the four continuously input image signals (IDAT1-IDAT4) that are sequentially input to the signal controller 600 are processed with the doubling and TGM signal processing in the TGM unit 650, and thereby the HL-LH mode is sequentially applied. Also, the luminance change (e.g., an image transition) is generated between the first input image signal (IDAT1) and the second input image signal (IDAT2) among the four input image signals (IDAT1-IDAT4). The exemplary embodiment shown in FIG. 12 provides the rising condition (Rising) in which a gray of the second input image signal (IDAT2) is larger than the gray of the first input image signal (IDAT1). Also, in the present exemplary embodiment, for the first input image signal (IDAT1) and the second input image signal (IDAT2), the luminance is changed depending on the way that the HL-LH mode is applied. This condition is referred to a break condition (Break).

FIG. 12(c) shows a constant target gray for each frame of the target image that is processed with the doubling and TGM signal processing shown in FIG. 12(b) and luminance changes GP0, GP1, and GP2 of the image. When the HL-LH mode is only applied in the TGM unit 650 through the doubling and TGM signal processing of the image signal and the image is output without the processing in the DCC unit 640, like the curve GP0 before the correction of FIG. 12(c), the liquid crystal cannot quickly perform the luminance change of the second input image signal (IDAT2) such that the increased luminance of the second input image signal (IDAT2) is not sufficiently expressed.

In contrast, as described above, when outputting the image as the correction image signal Gn' that is processed by the first correction in the DCC unit 640, the image as the correction image signal Gn' having a larger gray than the original second input image signal (IDAT2) is output such that the increased luminance of the second input image signal (IDAT2) may be sufficiently expressed like the first correction curve GP1 of FIG. 12(c). In the first frame displaying the second image (L) among the frames that are processed by the doubling and TGM signal processing of the second input image signal (IDAT2), the slope of the first correction curve GP1 is different from the slope of the curve GP0 before the correction.

However, in this case, the first correction processing of the DCC unit 640 is also applied to the second frame displaying the first image (H) of the high luminance among the frames that are processed with the doubling and TGM signal processing of the second input image signal (IDAT2), but the first image (H) having the sufficiently high luminance may not be displayed as shown in the first correction curve GP1. Accordingly, the difference between the luminance of the image and the target gray is largely increased in the second frame displaying the first image (H) among the frames that are processed with the doubling and TGM signal processing of the second input image signal (IDAT2). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the second input image signal (IDAT2) such that the image of the sufficiently high luminance close to the target gray may be displayed in the second frame among the frames that are processed with the doubling and TGM signal processing of the second input image signal (IDAT2) like the secondary correction curve GP2 of FIG. 12(c).

In an exemplary embodiment, the weight value (W(g)) used for the post-processing has a value equal to or more than 1, as shown in FIG. 19.

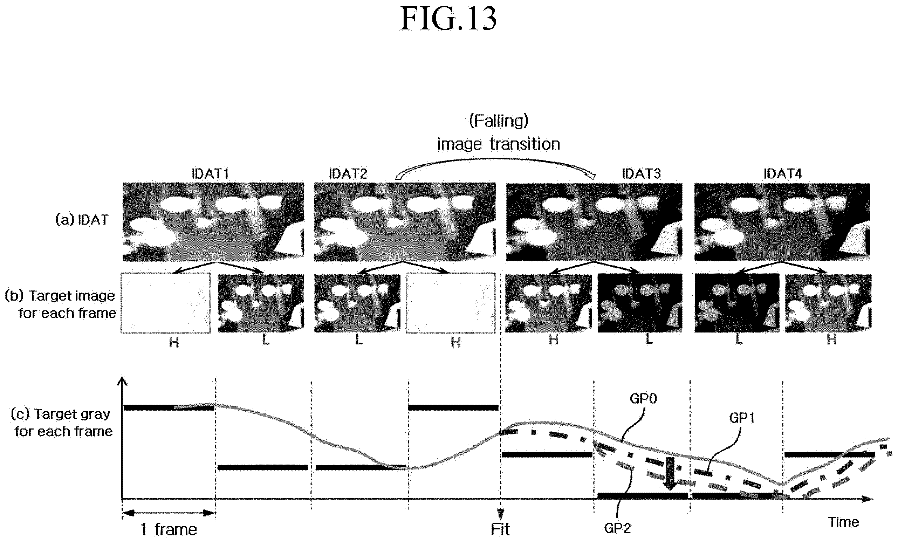

Next, referring to FIG. 13(a) and FIG. 13(b), the four continuously input image signals (IDAT1-IDAT4) that are sequentially input to the signal controller 600 are processed with the doubling and TGM signal processing in the TGM unit 650 such that the HL-LH mode is sequentially applied. Also, the luminance change is generated between the second input image signal (IDAT2) and the third input image signal (IDAT3) among the four input image signals (IDAT1-IDAT4). The exemplary embodiment shown in FIG. 13 shows the falling condition (Falling) in which the gray of the third input image signal (IDAT3) is smaller than the gray of the second input image signal (IDAT2). Also, in the present exemplary embodiment, the HL-LH mode is applied for the first input image signal (IDAT1) and the second input image signal (IDAT2) once such that the fit condition (Fit) in which the luminance is changed after one TGM mode is finished is applied.

FIG. 13(c) shows the constant target gray for each frame of the target image that is performed with the doubling and TGM signal processing shown in FIG. 13(b) and the luminance changes GP0, GP1, and GP2 of the image. When the HL-LH mode is only applied in the TGM unit 650 through the doubling and TGM signal processing of the image signal and the image is output without the processing in the DCC unit 640, like the curve GP0 before the correction of FIG. 13(c), the liquid crystal cannot quickly form the luminance change of the third input image signal (IDAT3) such that the decreased luminance of the third input image signal (IDAT3) is not sufficiently expressed.

In contrast, as described above, when outputting the image as the correction image signal that is processed by the first correction in the DCC unit 640, the image as the correction image signal Gn' having a smaller gray than the original third input image signal (IDAT3) is output such that the decreased luminance of the third input image signal (IDAT3) may be sufficiently expressed like the first correction curve GP1 of FIG. 13(c). In the first frame displaying the first image (H) among the frames that are processed by the doubling and TGM signal processing of the third input image signal (IDAT3), the slope of the first correction curve GP1 is different from the slope of the curve GP0 before the correction.

However, in this case, the first correction processing of the DCC unit 640 is also applied to the second frame displaying the second image (L) of the low luminance among the frames that are processed with the doubling and TGM signal processing of the third input image signal (IDAT3), but the second image (L) having the sufficiently low luminance may not be displayed as shown in the first correction curve GP1. Accordingly, the difference between the luminance of the image and the target gray is largely increased in the second frame displaying the second image (L) among the frames that are processed with the doubling and TGM signal processing of the third input image signal (IDAT3). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the third input image signal (IDAT3) such that the image of the sufficiently low luminance close to the target gray may be displayed in the second frame among the frames that are processed with the doubling and TGM signal processing of the third input image signal (IDAT3) like the secondary correction curve GP2 of FIG. 13(c).

In an exemplary embodiment, the weight value (W(g)) used for the post-processing has a value equal to or more than 1, as shown in FIG. 19.

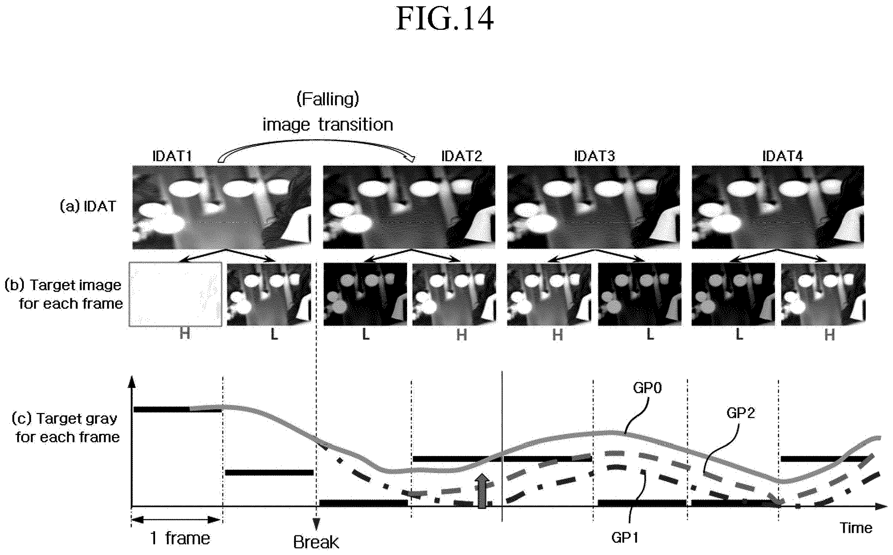

Next, referring to FIG. 14(a) and FIG. 14(b), the four continuously input image signals (IDAT1-IDAT4) that are sequentially input to the signal controller 600 are processed with the doubling and TGM signal processing in the TGM unit 650 such that the HL-LH mode is sequentially applied. Also, the luminance change is generated between the first input image signal (IDAT1) and the second input image signal (IDAT2) among the four input image signals (IDAT1-IDAT4). The exemplary embodiment shown in FIG. 14 shows the falling condition (Falling) in which the gray of the second input image signal (IDAT2) is smaller than the gray of the first input image signal (IDAT1). Also, in the present exemplary embodiment, the break condition (Break) in which the luminance is changed in the way that the HL-LH mode is applied for the first input image signal (IDAT1) and the second input image signal (IDAT2) is applied.

FIG. 14(c) shows the constant target gray for each frame of the target image that is processed with the doubling and TGM signal processing shown in FIG. 14(b) and the luminance changes GP0, GP1, and GP2 of the image. When the HL-LH mode is only applied in the TGM unit 650 through the doubling and TGM signal processing of the image signal and the image is output without the processing in the DCC unit 640, like the curve GP0 before the correction of FIG. 14(c), the liquid crystal cannot quickly form the luminance change of the second input image signal (IDAT2) such that the decreased luminance of the second input image signal (IDAT2) is not sufficiently expressed.

In contrast, as described above, when outputting the image as the correction image signal that is processed by the first correction in the DCC unit 640, the image as the correction image signal Gn' having a smaller gray than the original second input image signal (IDAT2) is output such that the decreased luminance of the second input image signal (IDAT2) may be sufficiently expressed like the first correction curve GP1 of FIG. 14(c). In the first frame displaying the second image (L) among the frames that are processed by the doubling and TGM signal processing of the second input image signal (IDAT2), the slope of the first correction curve GP1 is different from the slope of the curve GP0 before the correction.

However, in this case, the first correction processing of the DCC unit 640 is also applied to the second frame displaying the first image (H) of the high luminance among the frames that are processed with the doubling and TGM signal processing of the second input image signal (IDAT2) such that the first image (H) having the sufficiently high luminance may not be displayed as shown in the first correction curve GP1. Accordingly, the difference between the luminance of the image and the target gray is largely increased in the second frame displaying the first image (H) among the frames that are processed with the doubling and TGM signal processing of the second input image signal (IDAT2). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the second input image signal (IDAT2) such that the image of the sufficiently high luminance close to the target gray may be displayed in the second frame among the frames that are processed with the doubling and TGM signal processing of the second input image signal (IDAT2) like the secondary correction curve GP2 of FIG. 14(c).

In an exemplary embodiment, the weight value (W(g)) used for the post-processing has the value equal to or more than 0 and equal to or less then 1, as shown in FIG. 19.

Next, referring to FIG. 15(a) and FIG. 15(b), the four continuously input image signals (IDAT1-IDAT4) that are sequentially input to the signal controller 600 are processed with the doubling and TGM signal processing in the TGM unit 650 such that the LH-HL mode is sequentially applied. Also, the luminance change is generated between the second input image signal (IDAT2) and the third input image signal (IDAT3) among the four input image signals (IDAT1-IDAT4). The exemplary embodiment shown in FIG. 15 shows the rising condition (Rising) in which the gray of the third input image signal (IDAT3) is larger than the gray of the second input image signal (IDAT2). Also, in the present exemplary embodiment, the HL-LH mode is applied once for the first input image signal (IDAT1) and the second input image signal (IDAT2) such that the fit condition (Fit) in which the luminance is changed after one TGM mode is finished is applied.

FIG. 15(c) shows the constant target gray for each frame of the target image that is processed with the doubling and TGM signal processing shown in FIG. 15(b) and the luminance changes GP0, GP1, and GP2 of the image. When the LH-HL mode is only applied in the TGM unit 650 through the doubling and TGM signal processing of the image signal and the image is output without the processing in the DCC unit 640, like the curve GP0 before the correction of FIG. 15(c), the liquid crystal cannot quickly form the luminance change of the third input image signal (IDAT3) such that the increased luminance of the third input image signal (IDAT3) is not sufficiently expressed.

In contrast, as described above, when outputting the image as the correction image signal that is processed by the first correction in the DCC unit 640, the image as the correction image signal Gn' having a larger gray than the original third input image signal (IDAT3) is output such that the increased luminance of the third input image signal (IDAT3) may be sufficiently expressed like the first correction curve GP1 of FIG. 15(c). In the first frame displaying the first image (H) among the frames that are processed by the doubling and TGM signal processing of the third input image signal (IDAT3), the slope of the first correction curve GP1 is different from the slope of the curve GP0 before the correction.

However, in this case, the first correction processing of the DCC unit 640 is also applied to the second frame displaying the first image (H) of the high luminance among the frames that are processed with the doubling and TGM signal processing of the third input image signal (IDAT3), but the first image (H) having the sufficiently high luminance may not be displayed as shown in the first correction curve GP1. Accordingly, the difference between the luminance of the image and the target gray is largely increased in the second frame displaying the first image (H) among the frames that are processed with the doubling and TGM signal processing of the third input image signal (IDAT3). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the third input image signal (IDAT3) such that the image of the sufficiently high luminance close to the target gray may be displayed in the second frame among the frames that are processed with the doubling and TGM signal processing of the third input image signal (IDAT3) like the secondary correction curve GP2 of FIG. 15(c). This post-processing method may be the same as the rising condition (Rising) and the break condition (Break) of the HL-LH mode of the exemplary embodiment shown in FIG. 12. That is, the exemplary embodiment shown in FIG. 12 and the exemplary embodiment shown in FIG. 15 may perform the post-processing by using the same weight value (W(g)).

In an exemplary embodiment, the weight value (W(g)) used for the post-processing has a value equal to or more than 0 and equal to or less than 1, as shown in FIG. 19.

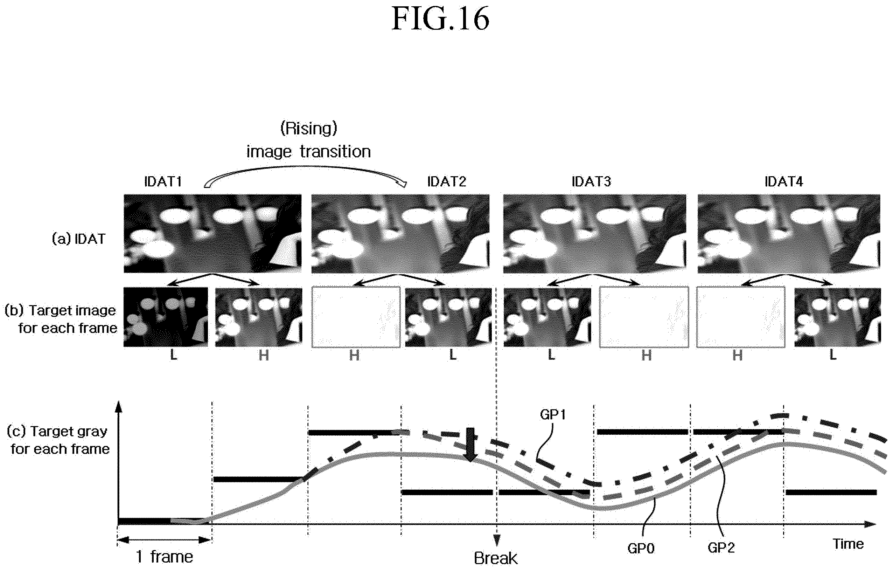

Next, referring to FIG. 16(a) and FIG. 16(b), the four continuously input image signals (IDAT1-IDAT4) that are sequentially input to the signal controller 600 are processed with the doubling and TGM signal processing in the TGM unit 650 such that the LH-HL mode is sequentially applied. Also, the luminance change is generated between the first input image signal (IDAT1) and the second input image signal (IDAT2) among the four input image signals (IDAT1-IDAT4). The exemplary embodiment shown in FIG. 16 shows the rising condition (Rising) in which the gray of the second input image signal (IDAT2) is larger than the gray of the first input image signal (IDAT1). Also, in the present exemplary embodiment, the break condition (Break) in which the luminance is changed in the way that the LH-HL mode is applied for the first input image signal (IDAT1) and the second input image signal (IDAT2) is applied.

FIG. 16(c) shows the constant target gray for each frame of the target image that is processed with the doubling and TGM signal processing shown in FIG. 16(b) and the luminance changes GP0, GP1, and GP2 of the image. When the LH-HL mode is only applied in the TGM unit 650 through the doubling and TGM signal processing of the image signal and the image is output without the processing in the DCC unit 640, like the curve GP0 before the correction of FIG. 16(c), the liquid crystal cannot quickly form the luminance change of the third input image signal (IDAT3) such that the increased luminance of the third input image signal (IDAT3) is not sufficiently expressed.

In contrast, as described above, when outputting the image as the correction image signal that is processed by the first correction in the DCC unit 640, the image as the correction image signal Gn' having the larger gray than the original third input image signal (IDAT3) is output such that the increased luminance of the second input image signal (IDAT2) may be sufficiently expressed like the first correction curve GP1 of FIG. 16(c). In the first frame displaying the first image (H) among the frames that are processed by the doubling and TGM signal processing of the second input image signal (IDAT3), the slope of the first correction curve GP1 is different from the slope of the curve GP0 before the correction.

However, in this case, the first correction processing of the DCC unit 640 is also applied to the second frame displaying the second image (L) of the low luminance among the frames that are processed with the doubling and TGM signal processing of the second input image signal (IDAT2) such that the second image (L) having the sufficiently low luminance may not be displayed as shown in the first correction curve GP1. Accordingly, the difference between the luminance of the image and the target gray is largely increased in the second frame displaying the second image (L) among the frames that are processed with the doubling and TGM signal processing of the second input image signal (IDAT2). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the second input image signal (IDAT2) such that the image of the sufficiently low luminance close the target gray may be displayed in the second frame among the frame that are processed with the doubling and TGM signal processing of the second input image signal (IDAT2) like the secondary correction curve GP2 of FIG. 16(c). This post-processing method may be the same as the rising condition (Rising) and the fit condition (Fit) of the HL-LH mode of the exemplary embodiment shown in FIG. 11. That is, the exemplary embodiment shown in FIG. 11 and the exemplary embodiment shown in FIG. 16 may perform the post-processing by using the same weight value (W(g)).

In an exemplary embodiment, the weight value (W(g)) used for the post-processing has a value equal to or more than 1, as shown in FIG. 19.

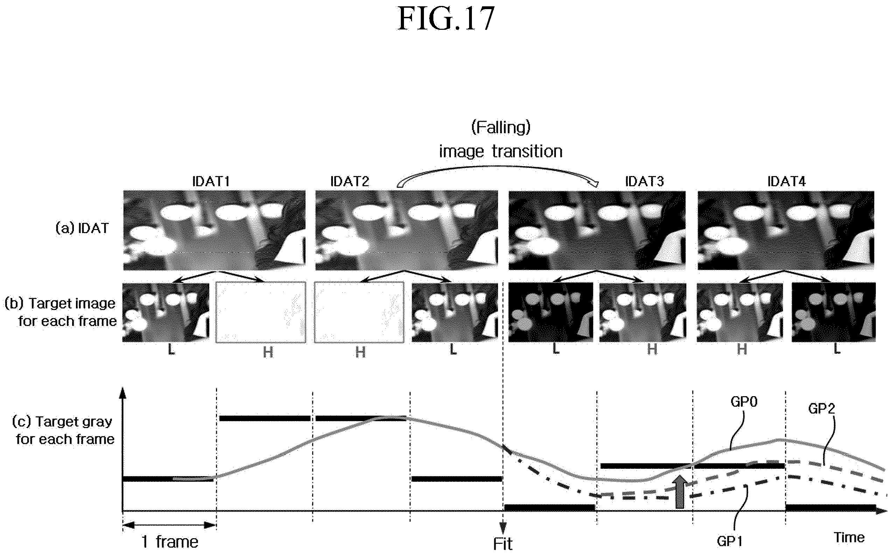

Next, referring to FIG. 17(a) and FIG. 17(b), the four continuously input image signals (IDAT1-IDAT4) that are sequentially input to the signal controller 600 are processed with the doubling and TGM signal processing in the TGM unit 650 such that the LH-HL mode is sequentially applied. Also, the luminance change is generated between the second input image signal (IDAT2) and the third input image signal (IDAT3) among the four input image signals (IDAT1-IDAT4). The exemplary embodiment shown in FIG. 17 shows the falling condition (Falling) in which the gray of the third input image signal (IDAT3) is larger than the gray of the second input image signal (IDAT2). Also, in the present exemplary embodiment, the LH-HL mode is applied once for the first input image signal (IDAT1) and the second input image signal (IDAT2) such that the fit condition (Fit) in which the luminance is changed after one TGM mode is finished is applied.

FIG. 17(c) shows the constant target gray for each frame of the target image that is processed with the doubling and TGM signal processing shown in FIG. 17(b) and the luminance changes GP0, GP1, and GP2 of the image. When the LH-HL mode is only applied in the TGM unit 650 through the doubling and TGM signal processing of the image signal and the image is output without the processing in the DCC unit 640, like the curve GP0 before the correction of FIG. 17(c), the liquid crystal cannot quickly form the luminance change of the third input image signal (IDAT3) such that the decreased luminance of the third input image signal (IDAT3) is not sufficiently expressed.

In contrast, as described above, when outputting the image as the correction image signal that is processed by the first correction in the DCC unit 640, the image as the correction image signal Gn' having a smaller gray than the original third input image signal (IDAT3) is output such that the decreased luminance of the third input image signal (IDAT3) may be sufficiently expressed like the first correction curve GP1 of FIG. 17(c). In the first frame displaying the second image (L) among the frames that are processed by the doubling and TGM signal processing of the third input image signal (IDAT3), the slope of the first correction curve GP1 is different from the slope of the curve GP0 before the correction.

However, in this case, the first correction processing of the DCC unit 640 is also applied to the second frame displaying the first image (H) of the high luminance among the frames that are processed with the doubling and TGM signal processing of the third input image signal (IDAT3) such that the first image (H) having the sufficiently high luminance may not be displayed as shown in the first correction curve GP1. Accordingly, the difference between the luminance of the image and the target gray is largely increased in the second frame displaying the first image (H) among the frames that are processed with the doubling and TGM signal processing of the third input image signal (IDAT3). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the third input image signal (IDAT3) such that the image of the sufficiently high luminance close to the target gray may be displayed in the second frame among the frames that are processed with the doubling and TGM signal processing of the third input image signal (IDAT3) like the secondary correction curve GP2 of FIG. 17(c). This post-processing method may be the same as the falling condition (Falling) and the break condition (Break) of the HL-LH mode of the exemplary embodiment shown in FIG. 14. That is, the exemplary embodiment shown in FIG. 14 and the exemplary embodiment shown in FIG. 17 may perform the post-processing by using the same weight value (W(g)).

In an exemplary embodiment, the weight value (W(g)) used for the post-processing has a value equal to or more than 1, as shown in FIG. 19.

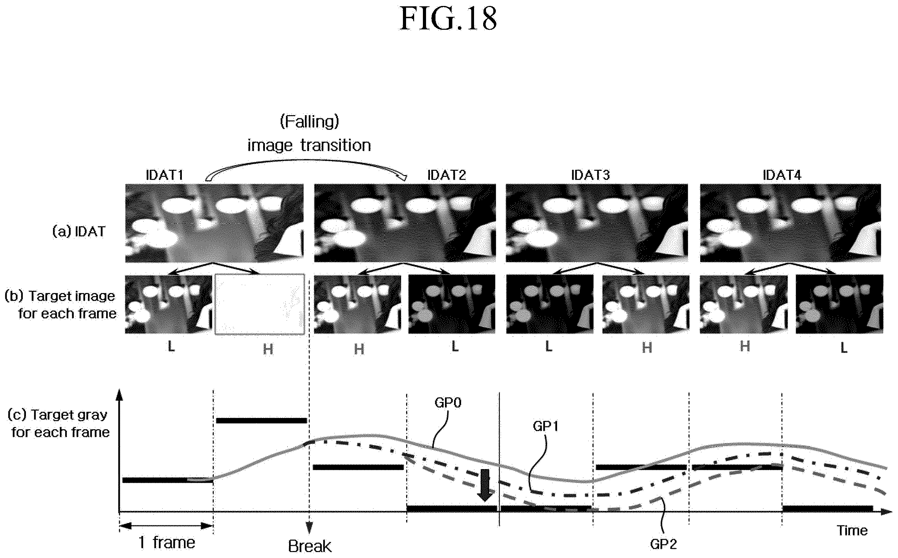

Next, referring to FIG. 18(a) and FIG. 18(b), the four continuously input image signals (IDAT1-IDAT4) that are sequentially input to the signal controller 600 are processed with the doubling and TGM signal processing in the TGM unit 650 such that the LH-HL mode is sequentially applied. Also, the luminance change is generated between the first input image signal (IDAT1) and the second input image signal (IDAT2) among the four input image signals (IDAT1-IDAT4). The exemplary embodiment shown in FIG. 18 shows the falling condition (Falling) in which the gray of the second input image signal (IDAT2) is larger than the gray of the first input image signal (IDAT1). Also, in the present exemplary embodiment, the break condition (Break) in which the luminance is changed in the way that the LH-HL mode is applied for the first input image signal (IDAT1) and the second input image signal (IDAT2) is applied one time.

FIG. 18(c) shows the constant target gray for each frame of the target image that is processed with the doubling and TGM signal processing shown in FIG. 18(b) and the luminance changes GP0, GP1, and GP2 of the image. When the LH-HL mode is only applied in the TGM unit 650 through the doubling and TGM signal processing of the image signal and the image is output without the processing in the DCC unit 640, like the curve GP0 before the correction of FIG. 16(c), the liquid crystal cannot quickly form the luminance change of the second input image signal (IDAT2) such that the decreased luminance of the second input image signal (IDAT2) is not sufficiently expressed.

In contrast, as described above, when outputting the image as the correction image signal that is processed by the first correction in the DCC unit 640, the image as the correction image signal Gn' having the smaller gray than the original third input image signal (IDAT3) is output such that the decreased luminance of the second input image signal (IDAT2) may be sufficiently expressed like the first correction curve GP1 of FIG. 18(c). In the first frame displaying the first image (H) among the frames that are processed by the doubling and TGM signal processing of the second input image signal (IDAT2), the slope of the first correction curve GP1 is different from the slope of the curve GP0 before the correction.

However, in this case, the first correction processing of the DCC unit 640 is also applied to the second frame displaying the second image (L) of the low luminance among the frames that are processed with the doubling and TGM signal processing of the second input image signal (IDAT2) such that the second image (L) having the sufficiently low luminance may not be displayed as shown in the first correction curve GP1. Accordingly, the difference between the luminance of the image and the target gray is largely increased in the second frame displaying the second image (L) among the frames that are processed with the doubling and TGM signal processing of the second input image signal (IDAT2). However, according to an exemplary embodiment of the present invention, the DCC unit 640 of the signal controller 600 multiplies the predetermined weight value (W(g)) by the correction image signal that is firstly corrected or applies the post-processing vicariously outputting the current image signal Gn before the first correction as the final correction image signal Gn* in the second frame among the frames that are processed with the doubling and TGM signal processing of the second input image signal (IDAT2) such that the image of the sufficiently low luminance close the target gray may be displayed in the second frame among the frames that are processed with the doubling and TGM signal processing of the second input image signal (IDAT2) like the secondary correction curve GP2 of FIG. 18(c). This post-processing method may be the same as the falling condition (Falling) and the fit condition (Fit) of the HL-LH mode of the exemplary embodiment shown in FIG. 13. That is, the exemplary embodiment shown in FIG. 13 and the exemplary embodiment shown in FIG. 18 may perform the post-processing by using the same weight value (W(g)).

In an exemplary embodiment, the weight value (W(g)) used for the post-processing has a value equal to or more than 0 and equal to or less than 1, as shown in FIG. 19.

FIG. 20 summarizes the use of the same lookup table (LUT) of the weight value (W(g)) capable of being applied to the post-processing among the several conditions of the HL-LH mode and LH-HL mode of the TGM shown in 11 to FIG. 18, and the luminance change.

The case of the rising condition (Rising) and the fit condition (Fit) among the HL-LH mode may use the lookup table (LUT) of the same weight value (W(g)) as the case of the rising condition (Rising) and the break condition (Break) among the LH-HL mode to perform the post-processing, The case of the rising condition (Rising) and the break condition (Break) of the HL-LH mode may use the lookup table (LUT) of the same weight value (W(g)) as the case of the rising condition (Rising) and the fit condition (Fit) of the LH-HL mode to perform the post-processing. The case of the falling condition (Falling) and the fit condition (Fit) of the HL-LH mode may use the case of the lookup table (LUT) of the same weight value (W(g)) as the case of the falling condition (Falling) and break condition (Break) of the LH-HL mode to perform the post-processing. The case of the falling condition (Falling) and the break condition (Break) of the HL-LH mode may use the lookup table (LUT) of the same weight value (W(g)) as the case of the falling condition (Falling) and the fit condition (Fit) of the LH-HL mode to perform the post-processing.

In the post-processing using the weight value (W(g)), the weight value (W(g)) to be applied may be selected according to the corresponding TGM mode and the luminance change condition by using the flag signal generated in the comparator 630.

According to an exemplary embodiment of the present invention, the liquid crystal display is operated with the TGM mode of the HL-HL mode or the LH-LH mode. In this case, the display sequence of the first image (H) and the second image (L) are equally repeated per two frames for each of the first input image signal (IDAT1) and the second input image signal (IDAT2) such that it may be substantially referred to as the HL mode or the LH mode. That is, the same modes are repeated for two frames such that the fit condition (Fit) is always applied when the change is generated to the gray of the first input image signal (IDAT1) and the second input image signal (IDAT2). Accordingly, in the case that the liquid crystal display according to an exemplary embodiment of the present invention is operated with the TGM mode of the HL-HL mode or the LH-LH mode, the fit condition (Fit) that was previously described may be applied.

Next, a signal controller of the liquid crystal display and an image signal processing method according to an exemplary embodiment of the present invention will be described with reference to FIG. 21 along with the described drawings.

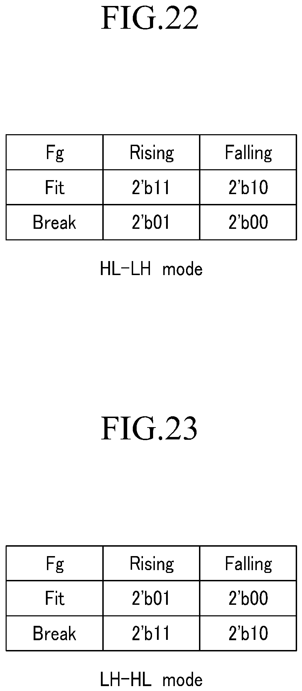

FIG. 21 is a block diagram of an image signal processor of a liquid crystal display according to an exemplary embodiment of the present invention, FIG. 22 is a view of one example of a flag signal applied to an HL-LH mode of a TGM type in an image signal processing process in a liquid crystal display according to an exemplary embodiment of the present invention, and FIG. 23 is a view of one example of a flag signal applied to an LH-HL mode of a TGM type in an image signal processing process in a liquid crystal display according to an exemplary embodiment of the present invention.

Referring to FIG. 21, the image signal processor 620 of the signal controller 600 of the liquid crystal display according to an exemplary embodiment of the present invention includes a comparator 630, a DCC unit 640, a TGM unit 650, and a post processor 660.

The comparator 630 compares the previous image signal G(n-1) and the current image signal Gn to generate a flag signal (Fg). The flag signal (Fg) may be stored to a separate memory and then may be transmitted to the post processor 660. In an exemplary embodiment, the flag signal (Fg) has four values according to the luminance change condition of the four combinations for each TGM mode as shown in FIG. 22 and FIG. 23.

FIG. 22 is a two bit exemplary embodiment of the flag signal (Fg) to be applied to the four luminance change conditions in a case of the HL-LH mode among the TGM modes, and FIG. 23 is a two bit exemplary embodiment of the flag signal (Fg) to be applied to the four luminance change conditions in a case of the LH-HL mode among the TGM modes.

For example, as the flag signal (Fg), the case of the rising condition (Rising) and the fit condition (Fit) among the HL-LH mode may be represented by '11' along with the case of the rising condition (Rising) and the break condition (Break) for the LH-HL mode, the case of the rising condition (Rising) and the break condition (Break) for the HL-LH mode may be represented by '01' along with the rising condition (Rising) and the fit condition (Fit) for the LH-HL mode, the case of the falling condition (Falling) and the fit condition (Fit) for the HL-LH mode may be represented by '10' along with the case of the falling condition (Falling) and break condition (Break) for the LH-HL mode, and the case of the falling condition (Falling) and the break condition (Break) for the HL-LH mode may be represented by '00' along with the case of the falling condition (Falling) and the fit condition (Fit) for the LH-HL mode.

As described above, the DCC unit 640 compares the previous image signal G(n-1) and the current image signal Gn according to the DCC method according to several techniques, and firstly corrects the current image signal Gn according to the predetermined condition when the grays of two image signals G(n-1) and Gn are different to generate the correction image signal Gn'.

The TGM unit 650 receives the correction image signal Gn' from the DCC unit 640 and processes it into a plurality of frames through the doubling and TGM signal processing.

The post processor 660 receives the correction image signal Gn' that is processed with the doubling and TGM signal from the TGM unit 650 for the post-processing. That is, the post processor 660 may output the image signal before the first correction as the final correction image signal Gn$^*$ in one frame of two frames that are processed with the doubling and TGM signal, may multiply the weight value (W(g)) stored in the separate memory by the correction image signal Gn', or may vicariously output the current image signal Gn before the first correction as the final correction image signal Gn*. In this post-processing, the post processor 660 may select the weight value (W(g)) by using the flag signal (Fg) generated in the comparator 630.

For example, the case of the rising condition (Rising) and the fit condition (Fit) for the HL-LH mode and the case of the rising condition (Rising) and the break condition (Break) for the LH-HL mode are represented by '11' of the same flag signal (Fg) and may be post-processed by using the same weight value (W(g)), the case of the rising condition (Rising) and the break condition (Break) for the HL-LH mode and the case of the rising condition (Rising) and the fit condition (Fit) for the LH-HL mode are represented by '01' of the same flag signal (Fg) and may be post-processed by using the same weight value (W(g)), the case of the falling condition (Falling) and fit condition (Fit) among the HL-LH mode and the case of the falling condition (Falling) and the break condition (Break) for the LH-HL mode are represented by '10' of the same flag signal (Fg) and may be post-processed by using the same weight value (W(g)), and the case of the falling condition (Falling) and the break condition (Break) for the HL-LH mode and the case of the falling condition (Falling) and the fit condition (Fit) for the LH-HL mode are represented by '00' of the same flag signal (Fg) and may be post-processed by using the same weight value (W(g)).

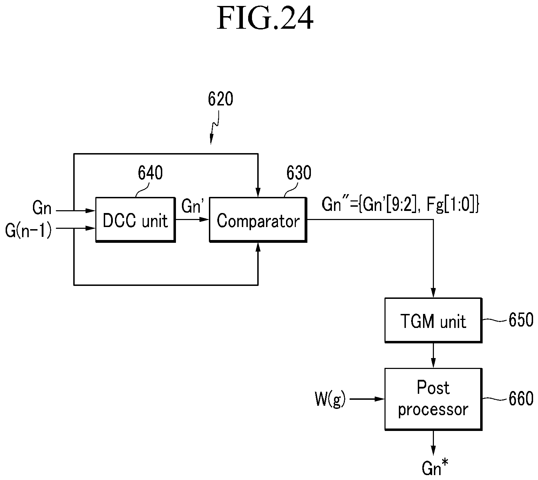

Next, a signal controller of the liquid crystal display and an image signal processing method according to an exemplary embodiment of the present invention will be described with reference to FIG. 24, FIG. 25, and FIG. 26. The same constituent elements as in the previous exemplary embodiment are indicated by the same reference numerals, and thus the same description is omitted.

FIG. 24 is a block diagram of an image signal processor of a liquid crystal display according to an exemplary embodiment of the present invention.

In the present exemplary embodiment, the DCC unit 640 compares the previous image signal G(n-1) and the current image signal Gn, and firstly corrects the current image signal Gn when the grays of two image signals G(n-1) and Gn are different from one another to generate the correction image signal Gn'.

The comparator 630 compares the previous image signal G(n-1) and the current image signal Gn to generate the flag signal (Fg), and then adds the flag signal (Fg) to the lower bit of the correction image signal Gn' input from the DCC unit 640 to generate the modified correction image signal Gn". For example, when the image signal before the first correction is 10 bits, the correction image signal Gn' that is added to the flag signal (Fg) may include the flag signal (Fg) of 2 bits (e.g., Fg[1:0]) and the correction image signal Gn' of 8 bits (e.g., Gn'[9:2]).

The TGM unit 650 receives the modified correction image signal Gn" resulting from adding the flag signal (Fg) to the correction image signal Gn' from the comparator 630, and processes it into a plurality of frames through the doubling and TGM signal processing.

The post processor 660 receives the output of the TGM unit 650 that is a result of the TGM unit 650 performing a doubling and TGM signal processing on the modified correction image signal Gn" for post-processing. The post processor 660 may output the image signal before the first correction as the final correction image signal Gn* in one frame of two frames that is processed with the doubling and TGM signal processing. In an exemplary embodiment, the post processor 660 receives the lower bit of the image signal before the first correction from the DCC unit 640 to generate the final correction image signal Gn* of the same bit as the image signal before the first correction.

Alternatively, the post processor 660 may multiply the weight value (W(g)) by the correction image signal that is firstly corrected in one frame of two frames that are processed with the doubling and TGM signal processing, or may vicariously output the current image signal Gn before the first correction as the final correction image signal Gn*. The weight value (W(g)) may be selected by using the flag signal (Fg) generated in the comparator 630.

The frame that is processed in the post processor 660 may be the latter frame among two frames that are processed with the doubling and TGM signal processing for the input image signal (IDAT) in which the luminance is changed.

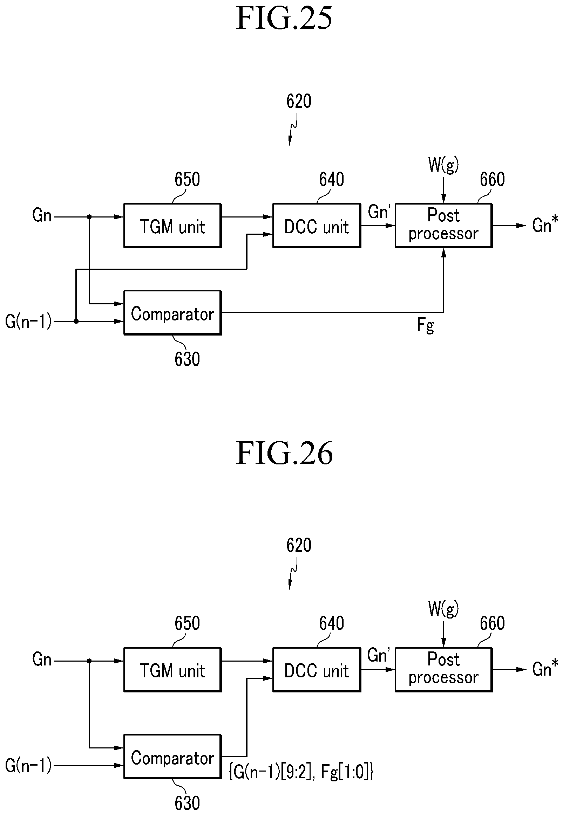

FIG. 25 is a block diagram of an image signal processor of a liquid crystal display according to an exemplary embodiment of the present invention.

In the present exemplary embodiment, the comparator 630 compares the previous image signal G(n-1) and the current image signal Gn to generate the flag signal (Fg). The flag signal (Fg) may be stored to a separate memory and then may be transmitted to the post processor 660.

The TGM unit 650 receives the current image signal Gn and processes it into a plurality of frames through the doubling and TGM signal processing.

The DCC unit 640 receives the previous image signal G(n-1) and a signal resulting from the TGM unit 650 performing the doubling and TGM processing on the current image signal Gn, and performs the DCC to generate the correction image signal Gn'.

The post processor 660 receives the correction image signal Gn' that is processed with the doubling and TGM signal processing from the DCC unit 640 for the post-processing. For example, the post processor 660 may output the image signal before the first correction as the final correction image signal Gn* in one frame of two frames that are processed with the doubling and TGM signal processing, may multiply the weight value (W(g)) by the correction image signal Gn', or may vicariously output the current image signal Gn before the first correction as the final correction image signal Gn*. In this post-processing, the post processor 660 may select the weight value (W(g)) by using the flag signal (Fg) generated in the comparator 630.

FIG. 26 is a block diagram of an image signal processor of a liquid crystal display according to an exemplary embodiment of the present invention.

In the present exemplary embodiment, the comparator 630 does not separately output the flag signal (Fg) to the post processor 660 and adds the flag signal (Fg) to the lower bit of the previous image signal G(n-1) to output the previous image signal including the flag signal (Fg) to the DCC unit 640. For example, when the image signal before the first correction is 10 bits, the previous image signal that is added with the flag signal (Fg) may include the flag signal (Fg) of 2 bits (e.g., Fg[1:0]) and the previous image signal G(n-1) of 8 bits (e.g., G(n-1)[9:2]).

The DCC unit 640 receives the current image signal Gn that is processed with the doubling and TGM signal processing from the TGM unit 650, and the previous image signal that is added with the flag signal (Fg) from the comparator 630 and performs the DCC to generate the correction image signal Gn'.

The post processor 660 receives the correction image signal Gn' that is processed with the doubling and TGM signal processing from the DCC unit 640 for the post-processing. For example, the post processor 660 may output the image signal before the first correction as the final correction image signal Gn* in one frame of two frames that are processed with the doubling and TGM signal processing, may multiply the weight value (W(g)) by the correction image signal Gn', or may vicariously output the image signal Gn before the first correction as the final correction image signal Gn*. In this post-processing, the post processor 660 may select the weight value (W(g)) by using the flag signal (Fg) of the previous image signal added with the flag signal (Fg) input in the DCC unit 640.

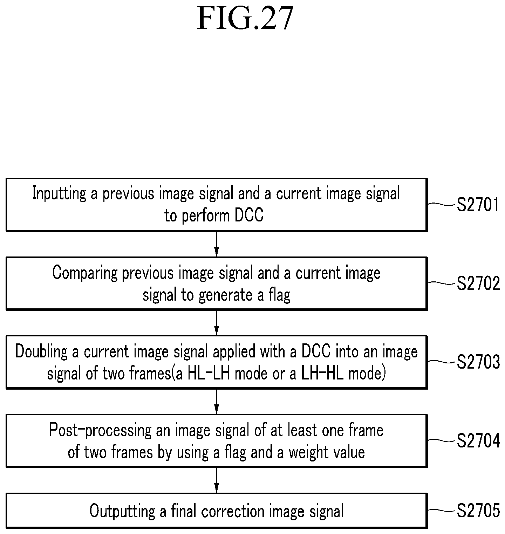

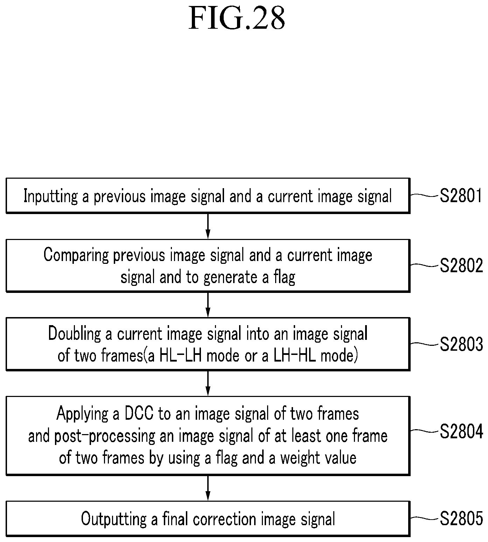

An image signal processing method of the signal controller 600 according to an exemplary embodiment of the present invention will be described with reference to FIG. 27 and FIG. 28.

FIG. 27 and FIG. 28 are flowcharts showing the image signal processing method of the liquid crystal display according to an exemplary embodiment of the present invention.

Referring to FIG. 27, the image signal processing method of the present exemplary embodiment is similar to the exemplary embodiment shown in FIG. 21 to FIG. 24. The previous image signal G(n-1) and the current image signal Gn are input from an external source to perform DCC to generate a correction image signal Gn' (S2701). The two signals are compared to generate the flag signal (Fg) (S2702). Next, the current image signal that is applied with the DCC and is corrected, that is, the correction image signal Gn' is processed into two frames through the doubling and TGM signal processing (S2703). In an exemplary embodiment, the doubling and TGM signal processing are performed according to the HL-LH mode or the LH-HL mode among the TGM modes. Next, the image signal of at least one frame of two frames that are processed through the doubling and TGM signal processing, for example, the second frame, is post-processed by using the flag signal (Fg) and the weight value (W(g)) or the current image signal Gn before the first correction to output the final correction image signal Gn* (S2705).

Next, referring to FIG. 28, the image signal processing method of the present exemplary embodiment is similar to the exemplary embodiment shown in FIG. 25 and FIG. 26. The previous image signal G(n-1) and the current image signal Gn are input from a external source (S2801). The two signals are compared with each other to generate a flag signal (Fg) (S2802). The current image signal Gn is processed into two frames through the doubling and TGM signal processing (S2803). In an exemplary embodiment, the doubling and TGM signal processing are performed according to the HL-LH mode or the LH-HL mode among the TGM modes. Next, the DCC is applied to the image signal of two frames that are processed by the doubling and TGM signal processing, and the image signal of at least one frame of two frames that are processed through the doubling and TGM signal processing, for example, the second frame, is post-processed by using the flag signal (Fg) and the weight value (W(g)) or the current image signal Gn before the first correction to output the final correction image signal (S2804). A result of the post-processing is output as a final correction image signal Gn* (S2805).

As described above, according to at least one exemplary embodiment of the present invention, transmittance and lateral visibility may be improved by applying the TGM, and the liquid crystal response speed may be compensated thereby preventing the display quality degradation by applying the DCC. Also, through the post-processing of the DCC application, the luminance of the second frame among a plurality of frames that are processed by the doubling and TGM signal processing may be compensated to be close to the target luminance such that the lateral visibility improvement and the liquid crystal response speed compensation may be maximized.

**Claims**

1. A method of processing an image signal of a liquid crystal display, comprising:

   receiving a previous image signal (G(n-1)) and a current image signal (Gn) as two sequential input image signals (IDAT);
   performing a first correction dynamic capacitance compensation (DCC) after or before performing a doubling of the frequency of the current image signal (Gn) to generate a correction image signal (Gn') comprising a plurality of doubled frames for the current image signal (Gn); and
   post-processing a secondary correction of the image signal of one frame among the plurality of doubled frames of the correction image signal (Gn') to generate a final correction image signal (Gn*);
   wherein the generating of the correction image signal (Gn') of the plurality of doubled frames comprises:

      doubling the current image signal (Gn) or the correction image signal (Gn') into the plurality of doubled frames according to a temporal gamma mixing (TGM) mode; and
      first correcting the current image signal (Gn) or the doubled current image signal (Gn) of the plurality of doubled frames; and

   wherein

      a gamma curve applied to the plurality of doubled frames includes a first gamma curve (GH) and a second gamma curve (GL),
      a luminance of a first image (H) of one of the doubled frames according to the first gamma curve (GH) is not lower than a luminance of a second image (L) of the one doubled frame according to the second gamma curve (GL) for an input image signal (IDAT), and
      the TGM mode applied to the plurality of doubled frames for two sequential input images (IDAT1, IDAT2) includes one of an HL-LH mode and an LH-HL mode;

   **characterized in that**

      the method further comprises comparing the previous image signal (G(n-1)) and the current image signal (Gn) to generate a flag signal (Fg) according to luminance change conditions, and the post-processing of the frame of the plurality of doubled frames to generate the final correction image signal (Gn*) comprises using the flag signal (Fg); and
      the performing comprises:

         setting the luminance change condition as one of a break condition (Break) in which the luminance of the input image signal (IDAT) is changed during the TGM mode or a fit condition (Fit) in which the luminance of the input image signal (IDAT) is changed after the TGM mode; and
         setting the luminance change condition as one of a rising condition (Rising) in which the luminance of the current image signal (Gn) is higher than the luminance of the previous image signal (G(n-1)) or a falling condition (Falling) in which the luminance of the current image signal (Gn) is lower than the luminance of the previous image signal (G(n-1)).

2. The method of claim 1, wherein
the flag signal (Fg) has four values according to the luminance change condition for each of the HL-LH mode and the LH-HL mode, and
a value of the flag signal (Fg) for the HL-LH mode forms a pair along with a value of the flag signal (Fg) for the LH-HL mode and has a same value.

3. The method of claim 2, wherein
the generating of the final correction image signal (Gn*) comprises outputting the current image signal (Gn) before the first correction as the final correction image signal (Gn*), or multiplying the portion of the plurality of doubled frames by a weight value (W(g)) and outputting the multiplied result as the final correction image signal (Gn*).

4. The method of claim 3, wherein the weight value (W(g)) is selected using the value of the flag signal (Fg).

5. The method of claim 4, wherein
the weight value (W(g)) of the rising condition (Rising) and the fit condition (Fit) in the HL-LH mode and the weight value (W(g)) of the rising condition (Rising) and the break condition (Break) in the LH-HL mode are equal to or more than 0 and equal to or less than 1,
the weight value (W(g)) of the rising condition (Rising) and the break condition (Break) in the HL-LH mode and the weight value (W(g)) of the rising condition (Rising) and the fit condition (Fit) in the LH-HL mode are equal to or more than 1,
the weight value (W(g)) of the falling condition (Falling) and the fit condition (Fit) in the HL-LH mode and the weight value (W(g)) of the falling condition (Falling) and the break condition (Break) in the LH-HL mode are equal to or more than 0 and equal to or less than 1, and
the weight value (W(g)) of the falling condition (Falling) and the break condition (Break) in the HL-LH mode and the weight value (W(g)) of the falling condition (Falling) and the fit condition (Fit) in the LH-HL mode are equal to or more than 1.

6. The method of claim 1, wherein
the generating of the correction image signal (Gn') of the plurality of doubled frames and the generating of the final correction image signal (Gn*) comprises:

   generating the correction image signal (Gn') by the first correcting of the current image signal (Gn);
   doubling the correction image signal (Gn') into the plurality of doubled frames; and
   post-processing the portion of the plurality of doubled frames using the flag signal (Fg).

7. The method of claim 1, wherein
the generating of the correction image signal (Gn') of the plurality of doubled frames and the generating of the final correction image signal (Gn*) comprises:

   generating the correction image signal (Gn') by the first correcting of the current image signal (Gn);
   adding the flag signal (Fg) to a lower bit of the correction image signal (Gn');
   doubling the correction image signal (Gn') added by the flag signal (Fg) into the plurality of doubled frames; and
   post-processing the portion of the plurality of doubled frames using the flag signal (Fg) added to the lower bit of the correction image signal (Gn').

8. The method of claim 1, wherein
the generating of the correction image signal (Gn') of the plurality of doubled frames and the generating of the final correction image signal (Gn*) comprises:

   doubling the current image signal (Gn) into the plurality of doubled frames;
   generating the correction image signal (Gn') by the first correcting of the doubled current image signal (Gn); and
   post-processing the portion of the plurality of doubled frames using the flag signal (Fg).

9. The method of claim 1, wherein
the generating of the correction image signal (Gn') of the plurality of doubled frames and the generating of the final correction image signal (Gn*) comprises:

doubling the current image signal (Gn) into the plurality of doubled frames;
adding the flag signal (Fg) to a lower bit of the previous image signal (G(n-1));
generating the correction image signal (Gn') by the first correcting of the doubled current image signal (Gn); and
post-processing the portion of the plurality of doubled frames using the flag signal (Fg) added to the lower bit of the previous image signal (G(n-1)).

10. A liquid crystal display comprising:

an image signal processor (620) configured to receive a previous image signal (G(n-1)) and a current image signal (Gn) as two sequential input image signals (IDAT), and perform a first correction dynamic capacitance compensation (DCC) after or before performing a doubling of a frame frequency of the current image signal (Gn) to generate a correction image signal (Gn') comprising a plurality of doubled frames that are doubled for the current image signal (Gn),
wherein the image signal processor (620) comprises a post processor (660) configured to post-process a secondary correction of the image signal of one frame among the plurality of doubled frames of the correction image signal (Gn') to generate a final correction image signal (Gn*);
wherein the image signal processor (620) comprises:

a temporal gamma mixing TGM unit (650) configured to double the current image signal (Gn) or the correction image signal (Gn') into the plurality of doubled frames according to a TGM mode; and
a DCC unit (640) first correcting the current image signal (Gn) or the doubled current image signal (Gn) of the plurality of doubled frames; and

wherein:

a gamma curve applied to the plurality of doubled frames includes a first gamma curve (GH) and a second gamma curve (GL),
luminance of a first image (H) of one of the double frames according to the first gamma curve (GH) is not lower than luminance of a second image (L) of the one double frame according to the second gamma curve (GL) for an input image signal (IDAT), and
the TGM mode applied to the plurality of doubled frames for two sequential input images (IDAT1, IDAT2) includes one of an HL-LH mode and an LH-HL mode;

**characterized in that**

a comparator (630) configured to compare the previous image signal (G(n-1)) and the current image signal (Gn) to generate a flag signal (Fg) according to luminance change conditions is further comprised,
the post processor (660) post-processes the frame of the plurality of doubled frames to generate the final correction image signal (Gn*); and
the performing comprises:

setting the luminance change condition as one of a break condition (Break) in which the luminance of the input image signal (IDAT) is changed during the TGM mode or a fit condition (Fit) in which the luminance of the input image signal (IDAT) is changed after the TGM mode; and
setting the luminance change condition as one of a rising condition (Rising) in which the luminance of the current image signal (Gn) is higher than the luminance of the previous image signal (G(n-1)) or a falling condition (Falling) in which the luminance of the current image signal (Gn) is lower than the luminance of the previous image signal (G(n-1)).

11. The liquid crystal display of claim 10, wherein
the flag signal (Fg) has four values according to the luminance change condition for each of the HL-LH mode and the LH-HL mode, and
a value of the flag signal (Fg) for the HL-LH mode forms a pair along with a value of the flag signal (Fg) for the LH-HL mode and has a same value.

12. The liquid crystal display of claim 11, wherein the post processor (660) outputs the current image signal (Gn) before the first correction as the final correction image signal (Gn*), or multiplies the correction image signal (Gn') of the portion of the plurality of doubled frames by a weight value (W(g)) and outputs the multiplied result as the final correction image signal (Gn*).

13. The liquid crystal display of claim 12, wherein the weight value (W(g)) is selected using the value of the flag signal (Fg).

14. The liquid crystal display of claim 13, wherein
the weight value (W(g)) of the rising condition (Rising) and the fit condition (Fit) in the HL-LH mode and the weight value (W(g)) of the rising condition (Rising) and the break condition (Break) in the LH-HL mode are equal to or more than 0 and equal to or less than 1,
the weight value (W(g)) of the rising condition (Rising) and the break condition (Break) in the HL-LH mode and the weight value (W(g)) of the rising condition (Rising) and the fit condition (Fit) in the LH-HL mode are equal to or more than 1,
the weight value (W(g)) of the falling condition (Falling) and the fit condition (Fit) in the HL-LH mode and the weight value (W(g)) of the falling condition (Falling) and the break condition (Break) in the LH-HL mode are equal to or more than 0 and equal to or less than 1, and
the weight value (W(g)) of the falling condition (Falling) and the break condition (Break) in the HL-LH mode and the weight value (W(g)) of the falling condition (Falling) and the fit condition (Fit) in the LH-HL mode are equal to or more than 1.

15. The liquid crystal display of claim 10, wherein
the DCC unit (640) outputs the correction image signal (Gn') generated by the first correction of the current image signal (Gn) to the TGM unit (650),
the TGM unit (650) doubles the correction image signal (Gn') into the plurality of doubled frame and outputs the doubled correct image signal to the post processor (660), and
the post processor (660) post-processes the portion of the plurality of doubled frames using the flag signal (Fg) from the comparator (630).

16. The liquid crystal display of claim 10, wherein
the DCC unit (640) outputs the correction image signal (Gn') generated by the first correction of the current image signal (Gn) to the TGM unit (650),
the comparator (630) adds the flag signal (Fg) to a lower bit of the correction image signal (Gn') and outputs the correction image signal (Gn') added by the flag signal (Fg) to the TGM unit (650),
the TGM unit (650) doubles the correction image signal (Gn') added by the flag signal (Fg) into the plurality of doubled frames and outputs the doubled correction mage signal added by the flag signal (Fg) to the post processor (660), and
the post processor (660) post-processes the portion of the plurality of doubled frames using the flag signal (Fg) added to the lower bit of the correction image signal (Gn').

17. The liquid crystal display of claim 10, wherein
the TGM unit (650) doubles the current image signal (Gn) into the plurality of doubled frames and outputs the doubled current image signal (Gn) to the DCC unit (640),
the DCC unit (640) outputs the correction image signal (Gn') generated by the first correction of the doubled current image signal (Gn) to the post processor (660), and
the post processor (660) post-processes the portion of the plurality of doubled frames using the flag signal (Fg) from the comparator (630).

18. The liquid crystal display of claim 10, wherein
the TGM unit (650) doubles the current image signal (Gn) into the plurality of doubled frames and outputs the doubled current image signal (Gn) to the DCC unit (640),
the comparator (630) adds the flag signal (Fg) to the lower bit of the previous image signal (G(n-1)) and outputs the previous image signal (G(n-1)) added by the flag signal (Fg) to the DCC unit (640),
the DCC unit (640) outputs the correction image signal (Gn') generated by the first correction of the doubled current image signal (Gn) to the post processor (660), and
the post processor (660) post-processes the portion of the plurality of doubled frames using the flag signal (Fg) added to the lower bit of the previous image signal (G(n-1)).

**Patentansprüche**

1. Verfahren zum Verarbeiten eines Bildsignals einer Flüssigkristallanzeige, umfassend:

Empfangen eines vorhergehenden Bildsignals (G(n-1)) und eines aktuellen Bildsignals (Gn) als zwei sequenzielle Eingangsbildsignale (IDAT);

Durchführen einer ersten korrigierenden dynamischen Kapazitätskompensation (DCC) nach oder vor Durchführung einer Verdopplung der Frequenz des aktuellen Bildsignals (Gn), um ein Korrektur-Bildsignal (Gn') zu erzeugen, das eine Vielzahl von verdoppelten Rahmen für das aktuelle Bildsignal (Gn) umfasst, und

Nachverarbeiten einer Sekundärkorrektur des Bildsignals eines Rahmens unter der Vielzahl von verdoppelten Rahmen des Korrektur-Bildsignals (Gn'), um ein finales Korrektur-Bildsignal (Gn*) zu erzeugen;

wobei das Erzeugen des Korrektur-Bildsignals (Gn') der Vielzahl von verdoppelten Rahmen die Schritte umfasst:

Verdoppeln des aktuellen Bildsignals (Gn) oder des Korrektur-Bildsignals (Gn') zur Vielzahl von verdoppelten Rahmen gemäß einem Temporal-Gamma-Mixing (TGM)-Modus, und

Durchführen einer ersten Korrektur des aktuellen Bildsignals (Gn) oder des verdoppelten aktuellen Bildsignals (Gn) der Vielzahl von verdoppelten Rahmen, und

wobei

eine Gammakurve, die auf die Vielzahl von verdoppelten Rahmen angewendet wird, eine erste Gammakurve (GH) und eine zweite Gammakurve (GL) umfasst,

eine Leuchtdichte eines ersten Bildes (H) eines der verdoppelten Rahmen gemäß der ersten Gammakurve (GH) nicht niedriger als eine Leuchtdichte eines zweiten Bildes (L) des einen verdoppelten Rahmens gemäß der zweiten Gammakurve (GL) für ein Eingangsbildsignal (IDAT) ist, und

der auf die Vielzahl von verdoppelten Rahmen für zwei sequenzielle Eingangsbilder (IDAT1, IDAT2) angewendete TGM-Modus einen aus einem HL-LH-Modus und einem LH-HL-Modus umfasst,

**dadurch gekennzeichnet, dass**

das Verfahren ferner das Vergleichen des vorhergehenden Bildsignals (G(n-1)) und des aktuellen Bildsignals (Gn), um ein Flagsignal (Fg) gemäß Leuchtdichtenänderungsbedingungen zu erzeugen, umfasst, und das Nachverarbeiten des Rahmens der Vielzahl von verdoppelten Rahmen, um das finale Korrektur-Bildsignal (Gn*) zu erzeugen, die Benutzung des Flagsignals (Fg) umfasst, und

das Durchführen die Schritte umfasst:

Setzen der Leuchtdichtenänderungsbedingung als Break-Bedingung (Break), bei der die Leuchtdichte des Eingangsbildsignals (IDAT) während des TGM-Modus geändert wird, oder als Fit-Bedingung (Fit), bei der die Leuchtdichte des Eingangsbildsignals (IDAT) nach dem TGM-Modus geändert wird, und

Setzen der Leuchtdichtenänderungsbedingung als Anstiegsbedingung (Rising), bei der die Leuchtdichte des aktuellen Bildsignals (Gn) höher als die Leuchtdichte des vorhergehenden Bildsignals (G(n-1)) ist, oder als Abstiegsbedingung (Falling), bei der die Leuchtdichte des aktuellen Bildsignals (Gn) niedriger als die Leuchtdichte des vorhergehenden Bildsignals (G(n-1)) ist.

2. Verfahren nach Anspruch 1, wobei das Flagsignal (Fg) vier Werte entsprechend der Leuchtdichtenänderungsbedingung für jeden der Modi HL-LH-Modus und LH-HL-Modus aufweist, und

ein Wert des Flagsignals (Fg) für den HL-LH-Modus zusammen mit einem Wert des Flagsignals (Fg) für den LH-HL-Modus ein Paar bildet und den gleichen Wert aufweist.

3. Verfahren nach Anspruch 2, wobei das Erzeugen des finalen Korrektur-Bildsignals (Gn*) die Schritte umfasst:

Ausgeben des aktuellen Bildsignals (Gn) vor der ersten Korrektur als finales Korrektur-Bildsignal (Gn*), oder Multiplizieren des Teils der Vielzahl von verdoppelten Rahmen mit einem Wichtungswert (W(g)) und Ausgeben des Multiplikationsergebnisses als finales Korrektur-Bildsignal (Gn*).

4. Verfahren nach Anspruch 3, wobei der Wichtungswert (W(g)) mittels des Wertes des Flagsignals (Fg) gewählt wird.

5. Verfahren nach Anspruch 4, wobei der Wichtungswert (W(g)) der Anstiegsbedingung (Rising) und der Fit-Bedingung (Fit) im HL-LH-Modus und der Wichtungswert (W(g)) der Anstiegsbedingung (Rising) und der Break-Bedingung (Break) im LH-HL-Modus gleich oder größer als 0 und gleich oder kleiner als 1 sind,
der Wichtungswert (W(g)) der Anstiegsbedingung (Rising) und der Break-Bedingung (Break) im HL-LH-Modus und der Wichtungswert (W(g)) der Anstiegsbedingung (Rising) und der Fit-Bedingung (Fit) im LH-HL-Modus gleich oder größer als 1 sind,
der Wichtungswert (W(g)) der Abstiegsbedingung (Falling) und der Fit-Bedingung (Fit) im HL-LH-Modus und der Wichtungswert (W(g)) der Abstiegsbedingung (Falling) und der Break-Bedingung (Break) im LH-HL-Modus gleich oder größer als 0 und gleich oder kleiner als 1 sind, und
der Wichtungswert (W(g)) der Abstiegsbedingung (Falling) und der Break-Bedingung (Break) im HL-LH-Modus und der Wichtungswert (W(g)) der Abstiegsbedingung (Falling) und der Fit-Bedingung (Fit) im LH-HL-Modus gleich oder größer als 1 sind.

6. Verfahren nach Anspruch 1, wobei das Erzeugen des Korrektur-Bildsignals (Gn') der Vielzahl von verdoppelten Rahmen und das Erzeugen des finalen Korrektur-Bildsignals (Gn*) die Schritte umfasst:

Erzeugen des Korrekturbildsignals (Gn') durch die erste Korrektur des aktuellen Bildsignals (Gn),
Verdoppeln des Korrektur-Bildsignals (Gn') zur Vielzahl von verdoppelten Rahmen, und
Nachverarbeiten des Teils der Vielzahl von verdoppelten Rahmen, der das Flagsignal (Fg) benutzt.

7. Verfahren nach Anspruch 1, wobei das Erzeugen des Korrektur-Bildsignals (Gn') der Vielzahl von verdoppelten Rahmen und das Erzeugen des finalen Korrektur-Bildsignals (Gn*) die Schritte umfasst:

Erzeugen des Korrekturbildsignals (Gn') durch die erste Korrektur des aktuellen Bildsignals (Gn);
Addieren des Flagsignals (Fg) zu einem niedrigeren Bit des Korrektur-Bildsignals (Gn');
Verdoppeln des Korrektur-Bildsignals (Gn'), zu dem das Flagsignal (Fg) addiert wurde, zur Vielzahl von verdoppelten Rahmen, und
Nachverarbeiten des Teils der Vielzahl von verdoppelten Rahmen, der das Flagsignal (Fg) benutzt, das zu dem niedrigeren Bit des Korrektur-Bildsignals (Gn') addiert wurde.

8. Verfahren nach Anspruch 1, wobei das Erzeugen des Korrektur-Bildsignals (Gn') der Vielzahl von verdoppelten Rahmen und das Erzeugen des finalen Korrektur-Bildsignals (Gn*) die Schritte umfasst:

Verdoppeln des aktuellen Bildsignals (Gn) zur Vielzahl von verdoppelten Rahmen;
Erzeugen des Korrekturbildsignals (Gn') durch die erste Korrektur des verdoppelten aktuellen Bildsignals (Gn), und
Nachverarbeiten des Teils der Vielzahl von verdoppelten Rahmen, der das Flagsignal (Fg) benutzt.

9. Verfahren nach Anspruch 1, wobei das Erzeugen des Korrektur-Bildsignals (Gn') der Vielzahl von verdoppelten Rahmen und das Erzeugen des finalen Korrektur-Bildsignals (Gn*) die Schritte umfasst:

Verdoppeln des aktuellen Bildsignals (Gn) zur Vielzahl von verdoppelten Rahmen;
Addieren des Flagsignals (Fg) zu einem niedrigeren Bit des vorhergehenden Bildsignals (G(n-1));
Erzeugen des Korrekturbildsignals (Gn') durch die erste Korrektur des verdoppelten aktuellen Bildsignals (Gn), und
Nachverarbeiten des Teils der Vielzahl von verdoppelten Rahmen, der das Flagsignal (Fg) benutzt, das zu dem niedrigeren Bit des vorhergehenden Bildsignals (G(n-1)) addiert wurde.

10. Flüssigkristallanzeige, umfassend:

einen Bildsignalprozessor (620), der konfiguriert ist zum Empfangen eines vorhergehenden Bildsignals (G(n-1)) und eines aktuellen Bildsignals (Gn) als zwei sequenzielle Eingangsbildsignale (IDAT) und zum Durchführen einer ersten korrigierenden dynamischen Kapazitätskompensation (DCC) nach oder vor Durchführung einer Verdopplung einer Rahmenfrequenz des aktuellen Bildsignals (Gn), um ein Korrektur-Bildsignal (Gn') zu erzeugen, das eine Vielzahl von verdoppelten Rahmen umfasst, die für das aktuelle Bildsignal (Gn) verdoppelt sind, wobei der Bildsignalprozessor (620) einen Postprozessor (660) umfasst, der zum Nachverarbeiten einer Sekundärkorrektur des Bildsignals eines Rahmens unter der Vielzahl von verdoppelten Rahmen des Korrektur-Bildsignals (Gn'), um ein finales Korrektur-Bildsignal (Gn*) zu erzeugen, konfiguriert ist;
wobei der Bildsignalprozessor (620) umfasst:

eine Temporal-Gamma-Mixing (TGM)-Einheit (650), die zum Verdoppeln des aktuellen Bildsignals (Gn) oder des Korrektur-Bildsignals (Gn') zur Vielzahl von verdoppelten Rahmen gemäß einem TGM-Modus konfiguriert ist, und

eine DCC-Einheit (640), die eine erste Korrektur des aktuellen Bildsignals (Gn) oder des verdoppelten aktuellen Bildsignals (Gn) der Vielzahl von verdoppelten Rahmen durchführt, und

wobei:

eine Gammakurve, die auf die Vielzahl von verdoppelten Rahmen angewendet wird, eine erste Gammakurve (GH) und eine zweite Gammakurve (GL) umfasst,

eine Leuchtdichte eines ersten Bildes (H) eines der Doppelrahmen gemäß der ersten Gammakurve (GH) nicht niedriger als eine Leuchtdichte eines zweiten Bildes (L) des einen Doppelrahmens gemäß der zweiten Gammakurve (GL) für ein Eingangsbildsignal (IDAT) ist, und

der auf die Vielzahl von verdoppelten Rahmen für zwei sequenzielle Eingangsbilder (IDAT1, IDAT2) angewendete TGM-Modus einen aus einem HL-LH-Modus und einem LH-HL-Modus umfasst,

**dadurch gekennzeichnet, dass**

ferner ein Komparator (630) vorgesehen ist, der zum Vergleichen des vorhergehenden Bildsignals (G(n-1)) und des aktuellen Bildsignals (Gn), um ein Flagsignal (Fg) gemäß Leuchtdichtenänderungsbedingungen zu erzeugen, konfiguriert ist,

der Postprozessor (660) den Rahmen unter der Vielzahl von verdoppelten Rahmen nachverarbeitet, um das finale Korrektur-Bildsignal (Gn*) zu erzeugen, und

das Durchführen die Schritte umfasst:

Setzen der Leuchtdichtenänderungsbedingung als Break-Bedingung (Break), bei der die Leuchtdichte des Eingangsbildsignals (IDAT) während des TGM-Modus geändert wird, oder als Fit-Bedingung (Fit), bei der die Leuchtdichte des Eingangsbildsignals (IDAT) nach dem TGM-Modus geändert wird, und

Setzen der Leuchtdichtenänderungsbedingung als Anstiegsbedingung (Rising), bei der die Leuchtdichte des aktuellen Bildsignals (Gn) höher als die Leuchtdichte des vorhergehenden Bildsignals (G(n-1)) ist, oder als Abstiegsbedingung (Falling), bei der die Leuchtdichte des aktuellen Bildsignals (Gn) niedriger als die Leuchtdichte des vorhergehenden Bildsignals (G(n-1)) ist.

11. Flüssigkristallanzeige nach Anspruch 10, wobei das Flagsignal (Fg) vier Werte entsprechend der Leuchtdichtenänderungsbedingung für jeden der Modi HL-LH-Modus und LH-HL-Modus aufweist, und ein Wert des Flagsignals (Fg) für den HL-LH-Modus zusammen mit einem Wert des Flagsignals (Fg) für den LH-HL-Modus ein Paar bildet und den gleichen Wert aufweist.

12. Flüssigkristallanzeige nach Anspruch 11, wobei der Postprozessor (660) das aktuelle Bildsignal (Gn) vor der ersten Korrektur als finales Korrektur-Bildsignal (Gn*) ausgibt oder das Korrektur-Bildsignal (Gn') des Teils der Vielzahl von verdoppelten Rahmen mit einem Wichtungswert (W(g)) multipliziert und das Multiplikationsergebnis als finales Korrektur-Bildsignal (Gn*) ausgibt.

13. Flüssigkristallanzeige nach Anspruch 12, wobei der Wichtungswert (W(g)) mittels des Wertes des Flagsignals (Fg) gewählt wird.

14. Flüssigkristallanzeige nach Anspruch 13, wobei der Wichtungswert (W(g)) der Anstiegsbedingung (Rising) und der Fit-Bedingung (Fit) im HL-LH-Modus und der Wichtungswert (W(g)) der Anstiegsbedingung (Rising) und der Break-Bedingung (Break) im LH-HL-Modus gleich oder größer als 0 und gleich oder kleiner als 1 sind, der Wichtungswert (W(g)) der Anstiegsbedingung (Rising) und der Break-Bedingung (Break) im HL-LH-Modus und der Wichtungswert (W(g)) der Anstiegsbedingung (Rising) und der Fit-Bedingung (Fit) im LH-HL-Modus gleich oder größer als 1 sind,der Wichtungswert (W(g)) der Abstiegsbedingung (Falling) und der Fit-Bedingung (Fit) im HL-LH-Modus und der Wichtungswert (W(g)) der Abstiegsbedingung (Falling) und der Break-Bedingung (Break) im LH-HL-Modus gleich oder größer als 0 und gleich oder kleiner als 1 sind, und der Wichtungswert (W(g)) der Abstiegsbedingung (Falling) und der Break-Bedingung (Break) im HL-LH-Modus und der Wichtungswert (W(g)) der Abstiegsbedingung (Falling) und der Fit-Bedingung (Fit) im LH-HL-Modus gleich oder größer als 1 sind.

**15.** Flüssigkristallanzeige nach Anspruch 10, wobei die DCC-Einheit (640) das Korrektur-Bildsignal (Gn'), das durch die erste Korrektur des aktuellen Bildsignals (Gn) erzeugt wurde, an die TGM-Einheit (650) ausgibt, die TGM-Einheit (650) das Korrektur-Bildsignal (Gn') zur Vielzahl von verdoppelten Rahmen verdoppelt und das verdoppelte, korrekte Bildsignal an den Postprozessor (660) ausgibt, und

der Postprozessor (660) den Teil der Vielzahl von verdoppelten Rahmen nachverarbeitet, der das Flagsignal (Fg) vom Komparator (630) benutzt.

**16.** Flüssigkristallanzeige nach Anspruch 10, wobei die DCC-Einheit (640) das Korrekturbildsignal (Gn'), das durch die erste Korrektur des aktuellen Bildsignals (Gn) erzeugt wurde, an die TGM-Einheit (650) ausgibt,

der Komparator (630) das Flagsignal (Fg) zu einem niedrigeren Bit des Korrektur-Bildsignals (Gn') addiert und das Korrektur-Bildsignal (Gn'), zu dem das Flagsignal (Fg) addiert wurde, an die TGM-Einheit (650) ausgibt, die TGM-Einheit (650) das Korrektur-Bildsignal (Gn'), zu dem das Flagsignal (Fg) addiert wurde, zur Vielzahl von verdoppelten Rahmen verdoppelt und das verdoppelte Korrektur-Bildsignal, zu dem das Flagsignal (Fg) addiert wurde, an den Postprozessor (660) ausgibt, und

der Postprozessor (660) den Teil der Vielzahl von verdoppelten Rahmen nachverarbeitet, der das Flagsignal (Fg) benutzt, das zum niedrigeren Bit des Korrektur-Bildsignals (Gn') addiert wurde.

**17.** Flüssigkristallanzeige nach Anspruch 10, wobei die TGM-Einheit (650) das aktuelle Bildsignal (Gn) zur Vielzahl von doppelten Rahmen verdoppelt und das verdoppelte aktuelle Bildsignal (Gn) an die DCC-Einheit (640) ausgibt,

die DCC-Einheit (640) das Korrekturbildsignal (Gn'), das durch die erste Korrektur des verdoppelten aktuellen Bildsignals (Gn) erzeugt wurde, an den Postprozessor (660) ausgibt, und

der Postprozessor (660) den Teil der Vielzahl von verdoppelten Rahmen nachverarbeitet, der das Flagsignal (Fg) vom Komparator (630) benutzt.

**18.** Flüssigkristallanzeige nach Anspruch 10, wobei die TGM-Einheit (650) das aktuelle Bildsignal (Gn) zur Vielzahl von doppelten Rahmen verdoppelt und das verdoppelte aktuelle Bildsignal (Gn) an die DCC-Einheit (640) ausgibt, der Komparator (630) das Flagsignal (Fg) zum niedrigeren Bit des vorhergehenden Bildsignals (G(n-1)) addiert und das vorhergehende Bildsignal (G(n-1)), zu dem das Flagsignal (Fg) addiert wurde, an die DCC-Einheit (640) ausgibt, die DCC-Einheit (640) das Korrekturbildsignal (Gn'), das durch die erste Korrektur des verdoppelten aktuellen Bildsignals (Gn) erzeugt wurde, an den Postprozessor (660) ausgibt, und

der Postprozessor (660) den Teil der Vielzahl von verdoppelten Rahmen nachverarbeitet, der das Flagsignal (Fg) benutzt, das zu dem niedrigeren Bit des vorhergehenden Bildsignals (G(n-1)) addiert wurde.

**Revendications**

**1.** Méthode de traitement d'un signal d'image d'un afficheur à cristaux liquides, comprenant :

la réception d'un signal d'image précédent (G(n-1)) et d'un signal d'image actuel (Gn) sous la forme de deux signaux d'image d'entrée (IDAT) successifs ;
l'exécution d'une première compensation de capacitance dynamique de correction (DCC) après ou avant un doublement de la fréquence du signal d'image actuel (Gn) afin de générer un signal d'image de correction (Gn') comprenant un grand nombre de trames doublées pour le signal d'image actuel (Gn) ; et
le post-traitement d'une correction secondaire du signal d'image d'une trame parmi le grand nombre de trames doublées du signal d'image de correction (Gn') afin de générer un signal d'image de correction final (Gn*) ;
dans laquelle la génération du signal d'image de correction (Gn') du grand nombre de trames doublées comprend :

le doublement du signal d'image actuel (Gn) ou du signal d'image de correction (Gn') pour obtenir le grand nombre de trames doublées selon un mode de mixage gamma temporel (TGM) ; et
une première correction du signal d'image actuel (Gn) ou du signal d'image actuel doublé (Gn) du grand nombre de trames doublées ; et

dans laquelle

une courbe des gammas appliquée au grand nombre de trames doublées inclut une première courbe des gammas (GH) et une deuxième courbe des gammas (GL),
une luminance d'une première image (H) de l'une des trames doublées selon la première courbe des gammas (GH) n'est pas inférieure à une luminance d'une deuxième image (L) de la trame doublée selon la deuxième courbe des gammas (GL) pour un signal d'image d'entrée (IDAT), et

le mode TGM appliqué au grand nombre de trames doublées pour deux images d'entrée successives (IDAT1, IDAT2) inclut soit un mode HL-LH, soit un mode LH-HL ;

**caractérisée en ce que**

la méthode comprend en outre la comparaison du signal d'image précédent (G(n-1)) et du signal d'image actuel (Gn) afin de générer un signal d'indicateur (Fg) selon des conditions de changement de luminance, et le post-traitement de la trame parmi le grand nombre de trames doublées en vue de générer le signal d'image de correction final (Gn*) comprend l'utilisation du signal d'indicateur (Fg) ; et

l'exécution comprend :

le réglage de la condition de changement de luminance comme soit une condition de rupture (Break) dans laquelle la luminance du signal d'image d'entrée (IDAT) est changée pendant le mode TGM, soit une condition d'adaptation (Fit) dans laquelle la luminance du signal d'image d'entrée (IDAT) est changée après le mode TGM ; et

le réglage de la condition de changement de luminance comme soit une condition d'élévation (Rising) dans laquelle la luminance du signal d'image actuel (Gn) est supérieure à celle du signal d'image précédent (G(n-1)), soit une condition de baisse (Falling) dans laquelle la luminance du signal d'image actuel (Gn) est inférieure à celle du signal d'image précédent (G(n-1)).

2. Méthode selon la revendication 1, dans laquelle le signal d'indicateur (Fg) a quatre valeurs selon la condition de changement de luminance pour chacun des modes HL-LH et LH-HL, et

une valeur du signal d'indicateur (Fg) pour le mode HL-LH forme une paire avec une valeur du signal d'indicateur (Fg) pour le mode LH-HL et a la même valeur.

3. Méthode selon la revendication 2, dans laquelle la génération du signal d'image de correction final (Gn*) comprend l'émission en sortie du signal d'image actuel (Gn) avant la première correction comme signal d'image de correction final (Gn*), ou la multiplication de la partie du grand nombre de trames doublées par une valeur de pondération (W(g)) et l'émission en sortie du résultat multiplié comme signal d'image de correction final (Gn*).

4. Méthode selon la revendication 3, dans laquelle la valeur de pondération (W(g)) est sélectionnée à l'aide de la valeur du signal d'indicateur (Fg).

5. Méthode selon la revendication 4, dans laquelle la valeur de pondération (W(g)) de la condition d'élévation (Rising) et de la condition d'adaptation (Fit) en mode HL-LH et la valeur de pondération (W(g)) de la condition d'élévation (Rising) et de la condition de rupture (Break) dans le mode LH-HL sont égales ou supérieures à 0 et égales ou inférieures à 0,

la valeur de pondération (W(g)) de la condition d'élévation (Rising) et de la condition de rupture (Break) dans le mode HL-LH et la valeur de pondération (W(g)) de la condition d'élévation (Rising) et de la condition d'adaptation (Fit) dans le mode LH-HL sont égales ou supérieures à 1,

la valeur de pondération (W(g)) de la condition de baisse (Falling) et de la condition d'adaptation (Fit) dans le mode HL-LH et la valeur de pondération (W(g)) de la condition de baisse (Falling) et de la condition de rupture (Break) dans le mode LH-HL sont égales ou supérieures à 0 et égales ou inférieures à 1, et

la valeur de pondération (W(g)) de la condition de baisse (Falling) et de la condition de rupture (Break) dans le mode HL-LH et la valeur de pondération (W(g)) de la condition de baisse (Falling) et de la condition d'adaptation (Fit) dans le mode LH-HL sont égales ou supérieures à 1.

6. Méthode selon la revendication 1, dans laquelle la génération du signal d'image de correction (Gn') du grand nombre de trames doublées et la génération du signal d'image de correction final (Gn*) comprennent :

la génération du signal d'image de correction (Gn') par la première correction du signal d'image actuel (Gn) ;

le doublement du signal d'image de correction (Gn') pour donner le grand nombre de trames doublées ; et

le post-traitement de la partie du grand nombre de trames doublées à l'aide du signal d'indicateur (Fg).

7. Méthode selon la revendication 1, dans laquelle la génération du signal d'image de correction (Gn') du grand nombre de trames doublées et la génération du signal d'image de correction final (Gn*) comprennent :

la génération du signal d'image de correction (Gn') par la première correction du signal d'image actuel (Gn) ;

l'ajout du signal d'indicateur (Fg) à un bit inférieur du signal d'image de correction (Gn') ;

le doublement du signal d'image de correction (Gn') ajouté par le signal d'indicateur (Fg) pour donner le grand nombre de trames doublées ; et

le post-traitement de la partie du grand nombre de trames doublées à l'aide du signal d'indicateur (Fg) ajouté au bit inférieur du signal d'image de correction (Gn').

8. Méthode selon la revendication 1, dans laquelle la génération du signal d'image de correction (Gn') du grand nombre de trames doublées et la génération du signal d'image de correction final (Gn*) comprennent :

le doublement du signal d'image actuel (Gn) pour donner le grand nombre de trames doublées ;

la génération du signal d'image de correction (Gn') par la première correction du signal d'image actuel (Gn) doublé ; et

le post-traitement de la partie du grand nombre de trames doublées à l'aide du signal d'indicateur (Fg).

9. Méthode selon la revendication 1, dans laquelle la génération du signal d'image de correction (Gn') du grand nombre de trames doublées et la génération du signal d'image de correction final (Gn*) comprennent :

le doublement du signal d'image actuel (Gn) pour donner le grand nombre de trames doublées ;

l'ajout du signal d'indicateur (Fg) à un bit inférieur du signal d'image précédent (G(n-1)) ;

la génération du signal d'image de correction (Gn') par la première correction du signal d'image actuel (Gn) doublé ; et

le post-traitement de la partie du grand nombre de trames doublées à l'aide du signal d'indicateur (Fg) ajouté au bit inférieur du signal d'image précédent (G(n-1)).

10. Affichage à cristaux liquides comprenant :

un processeur de signal d'image (620) configuré pour recevoir un signal d'image précédent (G(n-1)) et un signal d'image actuel (Gn) sous la forme de deux signaux d'entrée d'image (IDAT) successifs et pour exécuter une première compensation de capacitance dynamique de correction (DCC) après ou avant l'exécution du doublement d'une fréquence de trame du signal d'image actuel (Gn) pour générer un signal d'image de correction (Gn') comprenant un grand nombre de trames doublées qui sont doublées pour le signal d'image actuel (Gn), dans lequel le processeur de signal d'image (620) comprend un post-processeur (660) configuré pour le post-traitement d'une correction secondaire du signal d'image d'une trame parmi le grand nombre de trames doublées du signal d'image de correction (Gn') afin de générer un signal d'image de correction final (Gn*) ; dans lequel le processeur de signal d'image (620) comprend :

une unité de mixage gamma temporel TGM (650) configurée pour doubler le signal d'image actuel (Gn) ou le signal d'image de correction (Gn') pour donner le grand nombre de trames doublées selon un mode de TGM ; et

une unité de commande numérique DCC (640) réalisant la première correction du signal d'image actuel (Gn) ou du signal d'image actuel doublé (Gn) du grand nombre de trames doublées ; et

dans lequel :

une courbe des gammas appliquée au grand nombre de trames doublées comprend une première courbe des gammas (GH) et une deuxième courbe des gammas (GL),

la luminance d'une première image (H) de l'une des doubles trames selon la première courbe des gammas (GH) n'est pas inférieure à la luminance d'une deuxième second image (L) de la double trame selon la deuxième courbe des gammas (GL) pour un signal d'image d'entrée (IDAT), et

le mode TGM appliqué au grand nombre de trames doublées pour deux images d'entrée successives (IDAT1, IDAT2) inclut soit un mode HL-LH, soit un mode LH-HL ;

**caractérisé en ce que**

un comparateur (630) configuré pour comparer le signal d'image précédent (G(n-1)) et le signal d'image actuel (Gn) afin de générer un signal d'indicateur (Fg) selon des conditions de changement de luminance est également prévu,

le post-processeur (660) post-traite la trame du grand nombre de trames doublées afin de générer le signal d'image de correction final (Gn*) ; et

l'exécution comprend :

la définition de la condition de changement de luminance comme soit une condition de rupture (Break) dans laquelle la luminance du signal d'image d'entrée (IDAT) change au cours du mode TGM, soit une condition d'adaptation (Fit) dans laquelle la luminance du signal d'image d'entrée (IDAT) change après le mode TGM ; et

la définition de la condition de changement de luminance comme soit une condition d'élévation (Rising) dans laquelle la luminance du signal d'image actuel (Gn) est supérieure à celle du signal d'image précédent (G(n-1)), soit une condition de baisse (Falling) dans laquelle la luminance du signal d'image actuel (Gn) est inférieure à celle du signal d'image précédent (G(n-1)).

11. Affichage à cristaux liquides selon la revendication 10, dans lequel le signal d'indicateur (Fg) a quatre valeurs selon la condition de changement de luminance pour chacun des modes HL-LH et LH-HL, et

une valeur du signal d'indicateur (Fg) pour le mode HL-LH forme une paire avec une valeur du signal d'indicateur (Fg) pour le mode LH-HL et a la même valeur.

12. Affichage à cristaux liquides selon la revendication 11, dans lequel le post-processeur (660) émet en sortie le signal d'image actuel (Gn) avant la première correction comme signal d'image de correction final (Gn*) ou multiplie le signal d'image de correction (Gn') de la partie du grand nombre de trames doublées par une valeur de pondération (W(g)) et émet en sortie le résultat multiplié comme signal d'image de correction final (Gn*).

13. Affichage à cristaux liquides selon la revendication 12, dans lequel la valeur de pondération (W(g)) est choisie en fonction de la valeur du signal d'indicateur (Fg).

14. Affichage à cristaux liquides selon la revendication 13, dans lequel la valeur de pondération (W(g)) de la condition d'élévation (Rising) et de la condition d'adaptation (Fit) en mode HL-LH et la valeur de pondération (W(g)) de la condition d'élévation (Rising) et de la condition de rupture (Break) en mode LH-HL sont égales ou supérieures à 0 et égales ou inférieures à 1,

la valeur de pondération (W(g)) de la condition d'élévation (Rising) et de la condition de rupture (Break) en mode HL-LH et la valeur de pondération (W(g)) de la condition d'élévation (Rising) et de la condition d'adaptation (Fit) en mode LH-HL sont égales ou supérieures à 1,

la valeur de pondération (W(g)) de la condition de baisse (Falling) et de la condition d'adaptation (Fit) en mode HL-LH et la valeur de pondération (W(g)) de la condition de baisse (Falling) et de la condition de rupture (Break) en mode LH-HL sont égales ou supérieures à 0 et égales ou inférieures à 1, et

la valeur de pondération (W(g)) de la condition de baisse (Falling) et de la condition de rupture (Break) en mode HL-LH et la valeur de pondération (W(g)) de la condition de baisse (Falling) et de la condition d'adaptation (Fit) en mode LH-HL mode sont égales ou supérieures à 1.

15. Affichage à cristaux liquides selon la revendication 10, dans lequel l'unité DCC (640) émet en sortie le signal d'image de correction (Gn') généré par la première correction du signal d'image actuel (Gn) vers l'unité TGM (650), l'unité TGM (650) double le signal d'image de correction (Gn') pour donner le grand nombre de trames doublées et émet en sortie le signal d'image correct doublé vers le post-processeur (660), et

le post-processeur (660) post-traite la partie du grand nombre de trames doublées à l'aide du signal d'indicateur (Fg) provenant du comparateur (630).

16. Affichage à cristaux liquides selon la revendication 10, dans lequel l'unité DCC (640) émet en sortie le signal d'image de correction (Gn') généré par la première correction du signal d'image actuel (Gn) vers l'unité TGM (650),

le comparateur (630) ajoute le signal d'indicateur (Fg) à un bit inférieur du signal d'image de correction (Gn') et émet en sortie le signal d'image de correction (Gn') ajouté par le signal d'indicateur (Fg) à l'unité TGM (650),

l'unité TGM (650) double le signal d'image de correction (Gn') ajouté par le signal d'indicateur (Fg) pour donner le grand nombre de trames doublées et émet en sortie le signal de correction d'image doublé ajouté par le signal d'indicateur (Fg) vers le post-processeur (660), et

le post-processeur (660) post-traite la partie du grand nombre de trames doublées à l'aide du signal d'indicateur (Fg) ajouté au bit inférieur du signal d'image de correction (Gn').

**17.** Affichage à cristaux liquides selon la revendication 10, dans lequel l'unité TGM (650) double le signal d'image actuel (Gn) pour donner le grand nombre de trames doublées et émet en sortie le signal d'image actuel doublé (Gn) vers l'unité DCC (640),

l'unité DCC (640) émet en sortie le signal d'image de correction (Gn') généré par la première correction du signal d'image actuel doublé (Gn) vers le post-processeur (660), et

le post-processeur (660) post-traite la partie du grand nombre de trames doublées à l'aide du signal d'indicateur (Fg) provenant du comparateur (630).

**18.** Affichage à cristaux liquides selon la revendication 10, dans lequel l'unité TGM (650) double le signal d'image actuel (Gn) pour donner le grand nombre de trames doublées et émet en sortie le signal d'image actuel doublé (Gn) vers l'unité DCC (640),

le comparateur (630) ajoute le signal d'indicateur (Fg) au bit inférieur du signal d'image précédent (G(n-1)) et émet en sortie le signal d'image précédent (G(n-1)) ajouté par le signal d'indicateur (Fg) à l'unité DCC (640),

l'unité DCC (640) émet en sortie le signal d'image de correction (Gn') généré par la première correction du signal d'image actuel doublé (Gn) vers le post-processeur (660), et

le post-processeur (660) post-traite la partie du grand nombre de trames doublées à l'aide du signal d'indicateur (Fg) ajouté au bit inférieur du signal d'image précédent (G(n-1)).

# FIG.1

# FIG.2

PX

Dj

GLi

Q

191

# FIG.3

600

620

Gn

Frame memory

G(n-1)

610

Comparator — 630

DCC unit — 640 → Gn*

TGM unit — 650

Memory — 651

# FIG.4

HL-LH mode

| 1F | 2F | 3F | 4F |
|---|---|---|---|

PX

H  L  L  H

IDAT 1          IDAT 2

# FIG.5

LH-HL mode

| 1F | 2F | 3F | 4F |
|---|---|---|---|

PX

L  H  H  L

IDAT 1          IDAT 2

# FIG.6

Normalized luminance

# FIG.7

# FIG.8

# FIG.9

# FIG.10

# FIG.11

EP 2 770 495 B1

# FIG.12

(Rising) image transition

IDAT1    IDAT2    IDAT3    IDAT4

(a) IDAT

(b) Target image for each frame

H    L    L    H    H    L    L    H

(c) Target gray for each frame

GP2

GP1

GP0

1 frame    Break    Time

# FIG.13

(Falling) image transition

IDAT1　　　　IDAT2　　　　　　　　　IDAT3　　　　IDAT4

(a) IDAT

(b) Target image for each frame

H　　L　　　L　　H　　　　H　　L　　　L　　H

(c) Target gray for each frame

GP0
GP1
GP2

1 frame

Fit

Time

EP 2 770 495 B1

# FIG.14

(Falling)
image transition

IDAT1    IDAT2    IDAT3    IDAT4

(a) IDAT

(b) Target image
for each frame

H    L    L    H    H    L    L    H

(c) Target gray
for each frame

GP0

GP2

1 frame    Break    GP1    Time

EP 2 770 495 B1

# FIG.15

(Rising)
image transition

IDAT1          IDAT2                             IDAT3          IDAT4

(a) IDAT

(b) Target image
for each frame

L        H        H        L        L        H        H        L

(c) Target gray
for each frame

GP2

GP1  GP0

1 frame                                 Fit                               Time

EP 2 770 495 B1

# FIG.16

(Rising) image transition

IDAT1    IDAT2    IDAT3    IDAT4

(a) IDAT

(b) Target image for each frame

L    H    H    L    L    H    H    L

(c) Target gray for each frame

GP1

GP0    GP2

1 frame    Break    Time

# FIG.17

# FIG.18

(Falling) image transition

IDAT1    IDAT2    IDAT3    IDAT4

(a) IDAT

(b) Target image for each frame

L    H    H    L    L    H    H    L

(c) Target gray for each frame

GP0

GP1

1 frame    Break    GP2    Time

EP 2 770 495 B1

# FIG.19

| W(g) | Rising | | Falling | |
|---|---|---|---|---|
| | Fit | Break | Fit | Break |
| HL–LH mode | 0 <= W(g) <= 1 | 1 <= W(g) | 0 <= W(g) <= 1 | 1 <= W(g) |
| LH–HL mode | 1 <= W(g) | 0 <= W(g) <= 1 | 1 <= W(g) | 0 <= W(g) <= 1 |

# FIG.20

| HL–LH mode | Rising | Fit |
| | | Break |
| | Falling | Fit |
| | | Break |
| LH–HL mode | Rising | Fit |
| | | Break |
| | Falling | Fit |
| | | Break |

Same LUT application

# FIG.21

# FIG.22

| Fg | Rising | Falling |
|-------|--------|---------|
| Fit | 2'b11 | 2'b10 |
| Break | 2'b01 | 2'b00 |

HL−LH mode

# FIG.23

| Fg | Rising | Falling |
|-------|--------|---------|
| Fit | 2'b01 | 2'b00 |
| Break | 2'b11 | 2'b10 |

LH−HL mode

# FIG.24

620

640                    630

Gn ——→ | DCC unit | Gn' → | Comparator | Gn″=[Gn'[9:2], Fg[1:0]]
G(n–1) ——→

TGM unit — 650

W(g) ——→ | Post processor | — 660

Gn*

# FIG.25

# FIG.26

# FIG.27

| Inputting a previous image signal and a current image signal to perform DCC | S2701 |

| Comparing previous image signal and a current image signal to generate a flag | S2702 |

| Doubling a current image signal applied with a DCC into an image signal of two frames(a HL-LH mode or a LH-HL mode) | S2703 |

| Post-processing an image signal of at least one frame of two frames by using a flag and a weight value | S2704 |

| Outputting a final correction image signal | S2705 |

# FIG.28

```
┌─────────────────────────────────────────────────────────┐
│ Inputting a previous image signal and a current image signal │──S2801
└─────────────────────────────────────────────────────────┘
                            │
                            ▼
┌─────────────────────────────────────────────────────────┐
│   Comparing previous image signal and a current image    │──S2802
│            signal and to generate a flag                 │
└─────────────────────────────────────────────────────────┘
                            │
                            ▼
┌─────────────────────────────────────────────────────────┐
│     Doubling a current image signal into an image signal │──S2803
│        of two frames(a HL-LH mode or a LH-HL mode)       │
└─────────────────────────────────────────────────────────┘
                            │
                            ▼
┌─────────────────────────────────────────────────────────┐
│        Applying a DCC to an image signal of two frames   │
│   and post-processing an image signal of at least one frame │──S2804
│       of two frames by using a flag and a weight value   │
└─────────────────────────────────────────────────────────┘
                            │
                            ▼
┌─────────────────────────────────────────────────────────┐
│         Outputting a final correction image signal       │──S2805
└─────────────────────────────────────────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090009509 A1

- EP 1884916 A2